# EUROPÄISCHE PATENTSCHRIFT

(11) **EP 1 354 234 B1**
(45) Veröffentlichungstag und Bekanntmachung des Hinweises auf die Patenterteilung: **31.05.2006**
(21) Anmeldenummer: 02734838.2
(22) Anmeldetag: 10.01.2002
(51) Int. Cl.: G02B 21/00, G12B 21/06

(54) **OPTISCHES SYSTEM UND VERFAHREN ZUM ANREGEN UND MESSEN VON FLUORESZENZ AN ODER IN MIT FLUORESZENSFARBSTOFFEN BEHANDELTEN PROBEN**
OPTICAL SYSTEM AND METHOD FOR EXCITING AND MEASURING OF FLUORESCENCE ON OR IN SAMPLES PREPARED WITH FLUORESCENT COLORANTS
SYSTEME OPTIQUE ET PROCEDE D'ACTIVATION ET DE MESURE DE LA FLUORESCENCE SUR OU DANS DES ECHANTILLONS TRAITES AVEC DES COLORANTS FLUORESCENTS

(30) Priorität: 26.01.2001 CH 144012001
(43) Veröffentlichungstag der Anmeldung: 22.10.2003
(73) Patentinhaber: Tecan Trading AG, 8708 Männedorf (CH)
(72) Erfinder: GFRÖRER, Andreas, 82549 Königsdorf (DE); ATZLER, Josef, A-5400 Hallein (AT)
(74) Vertreter: OK pat AG
(86) Internationale Anmeldenummer: PCT/CH2002/000014
(87) Internationale Veröffentlichungsnummer: WO 2002/059677

(56) Entgegenhaltungen:
- WO-A-00/26935
- WO-A-99/47964
- US-A- 5 081 350
- US-A- 5 260 569
- US-A- 5 459 325
- US-A- 5 981 956

## Beschreibung

Die Erfindung betrifft ein optisches System, zum Anregen und Messen von Fluoreszenz an oder in mit Fluoreszenzfarbstoffen behandelten Proben, gemäss dem Oberbegriff des unabhängigen Anspruchs 1. Solche optische Systeme sind z.B. als Raster-Licht-Mikroskope bekannt.

Raster-Licht-Mikroskope sind seit einigen Jahrzehnten bekannt. Ihr Funktionsprinzip beruht darauf, dass ein Lichtstrahl zu einem kleinen Lichtpunkt (dem sogenannten ersten Brennpunkt) auf einer Probe konzentriert wird. Die Probe und dieser Lichtpunkt werden gegenseitig so bewegt, dass eine bestimmte Fläche der Probe vom Lichtpunkt überstrichen (abgerastert) wird. Das Licht, das während dem Rastern die Probe durchdringt oder von dieser reflektiert wird bzw. die an oder in der Probe ausgelöste Fluoreszenz wird in der Folge als "von der Probe stammendes Licht" bezeichnet und von einem oder mehreren Photodetektoren gemessen. Ein Vergrösserungsbild entsteht dadurch, dass einem ursprünglichen Messpunkt eine bestimmte Fläche auf einem Abbild der Probe zugeordnet wird. Grundsätzlich umfasst deshalb ein solches Raster-Licht-Mikroskop:
- eine Lichtquelle, die einen Lichtstrahl produziert;
- einen Probenträger zum Halten der Probe;
- eine Optik zum Bilden eines ersten Brennpunktes auf der Probe;
- eine optische Anordnung zum Abbilden eines zweiten Brennpunktes mit dem Licht, welches die Probe durchstrahlte bzw. von der Probe reflektiert wurde bzw. welches die an oder in der Probe ausgelöste Fluoreszenz darstellt;
- einen Photodetektor zum Messen der Intensität des zweiten Brennpunkts; und
- einen Rastermechanismus zum gegenseitigen Bewegen von Probe und erstem Brennpunkt.

In einem konventionellen Raster-Licht-Mikroskop wird der Lichtstrahl zum Beleuchten der Probe in Richtung der zwei Raumachsen X und Y abgelenkt. Dieses Vorgehen birgt den Nachteil, dass der Einfallswinkel des durch die Projektivlinse gebrochenen Lichtes auf der Probe variiert und in der Abbildung des Probenlichtes durch die Objektivlinse eine Bildverfälschung erzeugt. Diese Bildverfälschung (Aberration) kann durch eine entsprechende Konstruktion der Objektivlinse korrigiert werden. Eine solche verteuert aber die Optik nachteilig und wirkt sich gleichzeitig in Bezug auf Lichtsammeleffizienz und Arbeitsabstand limitierend aus.

Gemäss US 5,081,350 wurde dieses Problem gelöst, indem dort eine Vorrichtung offenbart ist, mit der die Probe durch einen Lichtstrahl abgerastert wird. Dabei sind die Vorrichtung zur Beleuchtung der Probe und die Vorrichtung zur Messung des von der Probe kommenden Signals auf einer hin-und-her beweglichen Einheit montiert. Die Probe ist dabei auf einem senkrecht zu dieser Oszillation beweglichen Probentisch montiert, so dass ein Abrastern der Probe bei konstantem Einfallswinkel der Beleuchtung möglich ist. Weil, speziell für die Anwendung eines Schnellrasterverfahrens, die Lichtquelle vorzugsweise ausserhalb des beweglichen Teils des Raster-Licht-Mikroskops angeordnet sein soll, wird dort die Verwendung von Glasfaser-Lichtleitern vorgeschlagen, welche die Lichtquelle optisch mit dem Projektiv verbinden. Allerdings besteht die Gefahr, dass diese Glasfaserkabel durch das häufige und schnelle hin-und-her Bewegen beschädigt werden.

Aus US 5,260,569 ist eine verbesserte, gattungsgemässe Vorrichtung bekannt, welche die oben geschilderten Probleme des Standes der Technik löst, indem dort ein Raster-Licht-Mikroskop vorgeschlagen wird, welches als Lichtquelle einen Laser, einen Spiegel, zum Umlenken des aus dem Laser kommenden und parallel zu einer optischen Achse auf den Spiegel einfallenden Lichtes in Richtung einer Probe, ein Umlenkelement zum Umlenken dieses Lichtes auf diesen Spiegel, eine Optik zum Bilden eines ersten Brennpunktes, eine den Spiegel und die Optik umfassende, linear entlang der optischen Achse hin-und-her beweglich angeordnet Einheit, in welcher Spiegel und Optik gegeneinander unbeweglich angeordnet sind, einen mit dieser Einheit wirkverbundener, oszillierender Linearantrieb, einen zumindest in Richtung der X- und Z-Raumachsen bewegbaren Probentisch zum Ausrichten der Probe gegenüber dem ersten Brennpunkt, eine optische Anordnung zum Abbilden eines zweiten Brennpunktes mit von der Probe stammendem Licht, eine im zweiten Brennpunkt angeordnete Lochblende zum Ausblenden von von der Probe stammendem Licht, welches weiter entfernt als in einem bestimmten Abstand vom Brennpunkt auf diese Lochblende auftrifft, ein Spektralfilter zum Auswählen eines Anteils des durch die Lochblende durchgehenden, von der Probe stammenden Lichtes und einen Detektor zum Messen der Intensität des von der Lochblende durchgelassenen und vom Spektralfilter ausgewählten Teil des von der Probe stammendem Lichtes umfasst. Die Optik ist zudem als Kollimator für das von der Probe stammenden Licht und der Spiegel ist zudem zum Umlenken dieses kollimierten Lichtes entgegengesetzt zu der Einfallsrichtung des Lichtes aus dem Laser und parallel zu der optischen Achse ausgebildet.

Neben allen Merkmalen des Oberbegriffs von Anspruch 1 offenbart US 5,260,569 zudem ein Raster-Licht-Mikroskop, bei welchem das durch eine Lichtquelle ausgesandte Licht mittels einer als Teil des Projektivs wirkenden Kollimierlinse parallel gerichtet wird. Das kollimierte Licht pflanzt sich in der zur Rasterrichtung des Mikroskops parallelen Richtung fort. Deshalb fällt der kollimierte Lichtstrahl - unabhängig von der aktuellen Position der hin-und-her beweglichen Einheit - immer aus der identischen Richtung auf den Spiegel, der in der hin-und-her beweglichen Einheit fixiert ist. Dies hat zur Folge, dass der Lichtstrahl vom Spiegel auf die Probe immer in der gleichen Richtung und in kollimierter Form reflektiert wird. Dieses kollimierte Licht wird nach einer 90°-Reflexion am Spiegel mittels einer weiteren Projektivlinse, die ebenfalls in der hin-und-her beweglichen Einheit fixiert ist, in einem ersten Brennpunkt gebündelt. Deshalb kann das Abrastern der Probe mittels der hin-und-her beweglichen Einheit und mit dem Licht einer Lichtquelle erfolgen, welche an der hin-und-her beweglichen Einheit befestigt ist. Bevorzugt ist jedoch das Anbringen von Lichtquelle und Photodetektor ausserhalb der hin-und-her beweglichen Einheit, damit diese Einheit - zum Ermöglichen einer schnellen Abrasterung - einfacher und leichter gebaut werden kann.

Aus WO 00/26935 und aus WO 01/15193 ist je ein "Scanning-Confocal-Microscope image detection system" mit einer einfachen Objektivlinse und einem Translationssystem bekannt, das durch eine hochbeschleunigende Hochgeschwindigkeits-Volcecoil angetrieben ist. Dieses System umfasst ein Umlenkprisma und eine Objektivlinse, welche auf einem in einer Achse beweglichen Voicecoil-angetriebenen Translations-Tisch montiert sind. Ein Laser produziert einen Lichtstrahl, welcher einen Strahlteiler durchstösst und durch einen dichroischen Strahlteiler sowie einen Umlenkspiegel oder das Umlenkprisma reflektiert und durch die Objektivlinse auf eine Probe fokussiert wird.

Aus US 5,459,325 ist ein weiterer Hochgeschwindigkeits-Fluoreszenz-Scanner bekannt, welcher eine fixe Befestigung von Spiegel und Linse im Rasterkopf umfasst.

Aufgabe der vorliegenden Erfindung ist es, ein alternatives optisches System bzw. ein alternatives optisches Verfahren vorzuschlagen, das bei einfacherer, flexiblerer System-Bauweise bzw. Systemverwendung zusätzliche Möglichkeiten erschliesst und im Wesentlichen die Vorteile des Standes der Technik aufweist.

Diese Aufgabe wird - gemäss einem ersten Aspekt - mit einem System entsprechend der Merkmalskombination des unabhängigen Anspruchs 1 gelöst.

Weitere erfindungsgemässe Merkmale ergeben sich aus den abhängigen Ansprüchen.

Diese Aufgabe wird - gemäss einem zweiten Aspekt - mit einem Verfahren entsprechend der Merkmalskombination des unabhängigen Anspruchs 23 gelöst.

Weitere erfindungsgemässe Merkmale ergeben sich aus den abhängigen Ansprüchen.

Anhand von schematischen Zeichnungen, welche lediglich bevorzugte Beispiele von Ausführungsformen darstellen und den Umfang der Offenbarung in Bezug auf die vorliegende Erfindung nicht einschränken, wird diese Erfindung nun näher erläutert. Dabei zeigen:
- Fig. 1: ein quasi-räumliches Schema eines optischen Systems gemäss einer ersten Ausführungsform mit zwei Lasern;
- Fig. 2: einen vertikalen Teilschnitt eines optischen Systems gemäss einer zweiten Ausführungsform mit zumindest einem Laser;
- Fig. 3: einen vertikalen Teilschnitt eines optischen Systems gemäss einer dritten Ausführungsform mit zumindest einem Laser.

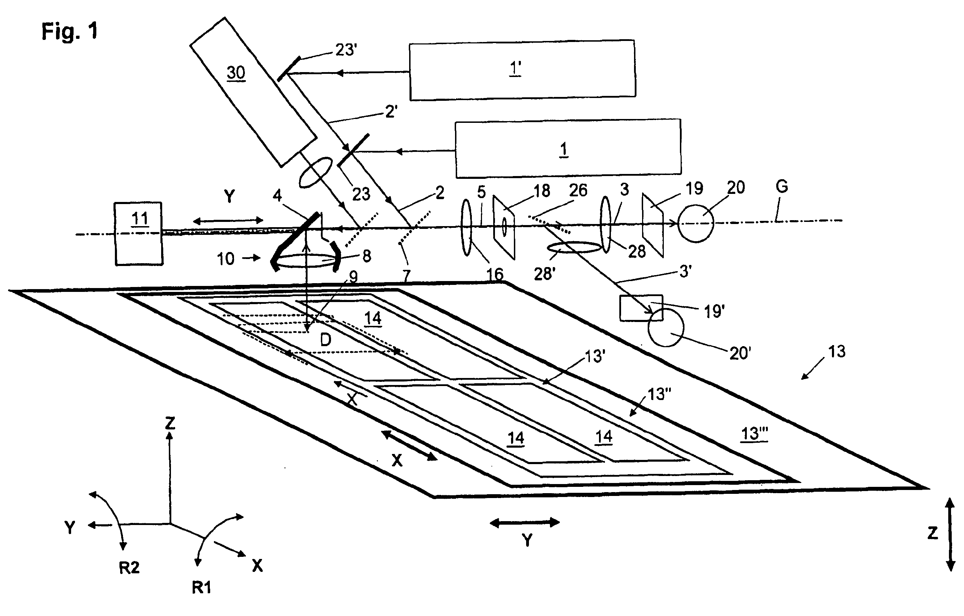

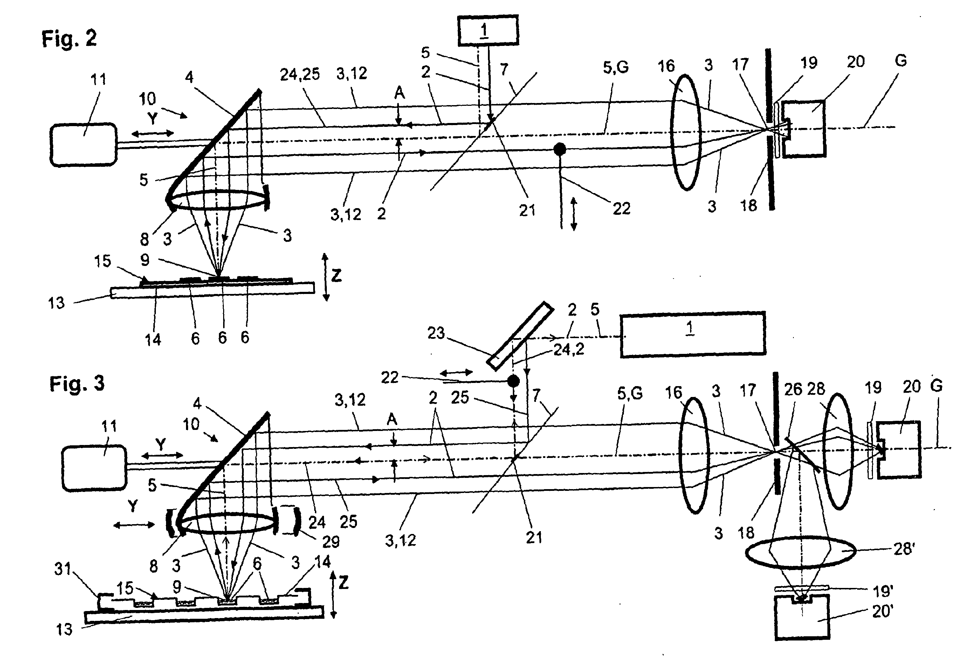

Figur 1 zeigt ein quasi-räumliches Schema eines optischen Systems des Reflexionstyps, gemäss einer ersten Ausführungsform. Vorzugsweise ist dieses optische System, zum Anregen und Messen von Fluoreszenz an oder in mit Fluoreszenzfarbstoffen behandelten Proben geeignet und umfasst einen ersten Laser 1. Dieser sendet - zum Anregen von ersten Fluoreszenzfarbstoffen - Licht einer ersten Wellenlänge 2 aus, damit diese ersten Fluoreszenzfarbstoffe Licht einer zweiten Wellenlänge 3 emittieren. Ein Spiegel 4 lenkt das aus dem ersten Laser 1 kommende und parallel zu einer optischen Achse 5 auf den Spiegel 4 einfallende Licht der ersten Wellenlänge 2 in Richtung einer Probe 6 um (vgl. Figuren 2 und 3). Ein Umlenkelement 7 lenkt das Licht 2 aus dem ersten Laser 1 auf diesen Spiegel 4 um. Eine Optik 8 bildet einen ersten Brennpunkt 9 für das aus dem ersten Laser 1 einfallende und durch den Spiegel 4 umgelenkte Licht der ersten Wellenlänge 2. Eine Einheit 10 umfasst den Spiegel 4 und die Optik 8 . Dieser Spiegel 4 und die Optik 8 sind in der Einheit 10 gegeneinander unbeweglich angeordnet.

Diese Einheit 10 ist linear entlang der optischen Achse 5 hin-und-her beweglich angeordnet und mit einem oszillierenden Linearantrieb 11 wirkverbunden. Der oszillierende Linearantrieb 11 kann z.B. als Stapel von Piezoelementen; als mechanischer, z.B. eine Pleuelstange umfassender Antrieb oder auch als durch Ultraschallwellen angeregter, natürlich oszillierender Festkörper ausgebildet sein. Bevorzugt ist jedoch die Ausbildung eines oszillierenden Linearantriebs 11 als "Voice coil", wie dies in US 5,260,569 und insbesondere in US 5,880,465 beschrieben ist. Dabei wird eine Einrichtung zur Erzeugung der hin-und-her Bewegung verwendet, welche im Wesentlichen einem Lautsprecher entspricht, wobei die Membranbewegungen mittels einer Wirkverbindung auf die Einheit 10 übertragen werden.

Diese Optik 8 ist entsprechend ausgebildet, dass sie zudem als Kollimator für das von den ersten Fluoreszenzfarbstoffen emittierte Licht zweiter Wellenlänge 3 ("von der Probe stammendes Licht") wirkt. Der Spiegel 4 lenkt zudem dieses kollimierte Licht 12 entgegengesetzt zu der Einfallsrichtung des Lichtes erster Wellenlänge 2 und parallel zu der optischen Achse 5 um.

Dieses optische System umfasst ausserdem einen zumindest in Richtung der X- und Z-Raumachsen bewegbaren Tisch 13 für mit zumindest einem ersten Fluoreszenzfarbstoff behandelten Proben 6 und zum Ausrichten der Probe 6 gegenüber dem ersten Brennpunkt 9. Vorzugsweise ist der Tisch 13 zudem in Richtung der Y-Raumachse bewegbar, wobei die X-Achse und die Y-Achse zumindest näherungsweise parallel zu der Oberfläche 15 eines Probenträgers 14 verlaufen.

Die X-, Y- und Z-Raumachsen stehen alle zumindest näherungsweise rechtwinklig zueinander, wobei sich die Y-Achse parallel zu einem horizontal verlaufenden Teil der optischen Achse 5 und zur ebenfalls horizontal verlaufenden geometrischen Achse G erstreckt.

Vorzugsweise ist der Tisch 13 mehrteilig gebaut und umfasst einen in Richtung der X-Achse über eine kleinere Distanz (dünner Pfeil) beweglichen Teil 13', einen in Richtung der X-Achse über eine grössere Distanz (dicker Doppelpfeil) beweglichen Teil 13" und einen in Richtung der Y-Achse über eine grössere Distanz (dikker Doppelpfeil) beweglichen Teil 13'''. Der ganze Tisch 13 oder zumindest der Teil 13' ist in Richtung der Z-Achse beweglich. Zum Bewegen der Teile des Tisches 13 werden vorzugsweise Elektromotoren eingesetzt.

Als Probenträger 14 sind beispielsweise Objektträger aus Glas geeignet, wie diese aus der Lichtmikroskopie seit langem bekannt sind. Andere bzw. ähnliche Probenträger können aus Kunststoff hergestellt sein. Wieder andere, im Wesentlichen flache, z.B. auch für die Rastertunnelmikroskopie geeignete Probenträger können aus Silizium oder pyrolytischem Graphit und dergleichen, ausgebildet sein bzw. diese Stoffe umfassen. Es kann auch vorgesehen sein, dass Probenträger verwendet werden, welche eine definierte Einteilung auf der Oberfläche aufweisen. Diese Einteilung kann in einer regelmässigen rillenförmigen Unterteilung bestehen; sie kann aber auch ein Array von Vertiefungen aufweisen. Beispiele solcher ein Array von Vertiefungen aufweisenden Probenträgern sind Silizium- oder Glasplatten mit einer Vielzahl von eingeätzten Vertiefungen. Weitere Beispiele sind Standard-Mikrotiterplatten^{™} (Handelsmarke von Beckman Coulter, Inc., 4300 N. Harbour Blvd., P.O. Box 3100 Fullerton, CA, USA 92834) oder "Mikroplatten", welche 96, 384, 1536 oder mehr Vertiefungen in der Form von Töpfchen oder sogenannten "Wells" umfassen.

Während trockene oder zumindest angetrocknete oder immobilisierte Proben bevorzugt zur Untersuchung auf Objektträgern präpariert werden, können Probenträger 14 mit Vertiefungen bzw. Wells flüssige oder sich in einer Flüssigkeit befindliche Proben 6 aufnehmen. Als besonders geeignet erwiesen hat sich für den Gebrauch im erfindungsgemässen optischen System ein Rahmen 31, der im Wesentlichen die Aussenmasse einer Mikroplatte aufweist. Dieser Rahmen passt deshalb in bzw. auf den gleichen Probentisch 13 wie eine Mikroplatte und kann dort auch entsprechend einer Mikroplatte automatisch, d.h. mit einem Roboterarm platziert oder weggenommen werden. Dieser Rahmen 31 ist zum Aufnehmen und Halten von mehreren Objektträgern, insbesondere aus Kunststoff, Glas, Silizium, pyrolytischem Graphit und dergleichen, ausgebildet. Speziell bewährt hat sich das Anordnen von 4 Glasobjektträgern auf einem solchen Rahmen. Dabei werden die Objektträger 14 beispielsweise wie in Fig. 1 dargestellt bzw. in einer Reihe, Längskante an Längskante - jeweils zusammengeschoben oder zueinander etwas beabstandet (vgl. Fig. 1) - angeordnet. Der Rahmen 31 wird vorzugsweise aus Kunststoff und im Spritzgussverfahren hergestellt, womit der Herstellungspreis niedrig und die Massgenauigkeit hoch gehalten werden kann. Diese Massgenauigkeit erleichtert wesentlich den Einsatz von solchen Rahmen 31 in allen möglichen Geräten zum automatisierten Handling von Mikroplatten. Selbstverständlich können die Rahmen 31 auch von Hand mit den Objektträgern 14 bestückt und in das erfindungsgemässe optische System eingesetzt werden. Mit Objektträgern 14 bestückte Rahmen 31 erleichtern zudem das weitere Handling dieser so gesicherten Objektträger, welche nun zwischen den in Geräten zum automatisierten Handling vorzunehmenden Prozessschritten nicht mehr direkt angefasst werden müssen.

Das optische System umfasst zudem eine optische Anordnung 16 zum Abbilden eines zweiten Brennpunktes 17 mit dem durch die ersten Fluoreszenzfarbstoffe emittierten, durch die Optik 8 kollimierten und den Spiegel 4 umgelenkten Licht der zweiten Wellenlänge 3 ("von der Probe stammendes Licht"). Eine im zweiten Brennpunkt 17 angeordnete Lochblende 18 dient zum Ausblenden von Licht der zweiten Wellenlänge 3, welches weiter entfernt als in einem bestimmten Abstand vom Brennpunkt 17 auf diese Lochblende 18 auftrifft. Vorzugsweise ist diese Lochblende 18 auswechselbar ausgebildet, damit mittels verschiedenen Durchmessern dieser Konfokalaperturblende die Schärfe bzw. die Helligkeit des zweiten Brennpunktes je nach Erfordernis erhöht oder erniedrigt werden kann. Speziell bei extrem schlechten Lichtverhältnissen kann eine grössere Blende, die eine Reduktion der Abbildungsschärfe bewirkt von Nutzen sein. Eine auswechselbare Lochblende 18 erlaubt eine Auswahl von unterschiedlichen Lochdurchmessern zur Anpassung der Abbildung im zweiten Brennpunkt 17 an das Probenvolumen bzw. an die gewünschte Eindringtiefe des Anregungsstrahls in der Probe sowie die Auswahl der entsprechenden Tiefenschärfe der Detektoranordnung.

Das optische System umfasst auch ein erstes Spektralfilter 19 zum Auswählen eines Anteils des durch die Lochblende 18 durchgehenden Lichtes der zweiten Wellenlänge 3 und einen ersten Detektor 20 zum Messen der Intensität des von der Lochblende 18 durchgelassenen und vom ersten Spektralfilter 19 ausgewählten Teil des Lichtes der zweiten Wellenlänge 3 ("von der Probe stammendes Licht").

Das erfindungsgemässe optische System umfasst eine stetig und nicht durch die Probe verlaufende, geometrische Achse G, auf welcher die optische Anordnung 16, der zweite Brennpunkt 17, die Lochblende 18, das erste Spektralfilter 19 und der erste Detektor 20 - zusammen mit dem Spiegel 4 und dem Umlenkelement 7 - angeordnet sind, wobei diese geometrische Achse G im Bereich zwischen dem Spiegel 4 und dem ersten Detektor 20 zumindest teilweise mit der optischen Achse 5 identisch ist.

Diese gemeinsame Anordnung auf der geometrischen Achse G hat den Vorteil, dass das Abrastern der Probe mittels einer sehr einfach gebauten hin-und-her beweglichen Einheit 10 mit hoher Geschwindigkeit erfolgen kann. Tatsächlich umfasst diese Einheit 10 nur den Spiegel 4 und die Optik 8. Die Oszillationsfrequenz beträgt vorzugsweise 20 Hz, wobei die Oszillationsamplitude D bis zu 25 mm oder mehr betragen kann.

Das Licht des entfernt von dieser Einheit 10 platzierten Lasers 1 und auch das von der Probe stammende, parallel entgegengesetzt zu demjenigen des Lasers 1 verlaufende Licht stellt eine rein optische Verbindung zwischen dem Rasterteil des Systems und dem Anregungs- und Messteil desselben dar, so dass keine Schwingungen vom Rasterteil auf den Messteil des Systems übertragen werden. Zudem ermöglicht es diese Anordnung direkt das gebündelte Licht 2 eines Lasers 1 ins optische System einzuspeisen. Der Spiegel 4 lenkt den gebündelten Laserstrahl 2 auf die Optik 8, welche wiederum den resultierenden Fokuspunkt immer an die gleiche Stelle auf der optischen Achse 5 lenkt. Diese optische Achse 5 verläuft zwischen dem Spiegel 4 und der Probe 6 vorzugsweise senkrecht. Dieses optische, auf der Einkopplung eines gebündelten Laserstrahls basierende System erleidet weniger Lichtverluste als solche, die einen kollimierten Lichtstrahl einspeisen und ablenken, um einen ersten Brennpunkt zu erhalten.

In dem erfindungsgemässen System ist die optische Achse 5 entlang einem vorzugsweise horizontal verlaufenden Teil der geometrischen Achse G identisch. In einer Richtung parallel zu diesen Achsen 5,G wird ein gebündelter Laserstrahl zum Anregen der Probe und in dazu entgegengesetzter Richtung ein kollimierter Strahl mit von der Probe stammendem Licht verwendet. Dadurch kann das Umlenkelement 7, welches den Laserstrahl 2 in Richtung des Spiegels 4 beugen soll, welches für den kollimierten Lichtstrahl aber durchlässig sein soll, eine einfache Glasscheibe sein. Typischerweise werden an einer Grenzfläche Glas/Luft ca.. 4% eines Lichtstrahls reflektiert und ca. 96% transmittiert. Eine Vergütung (Entspiegelung) erhöht im Bedarfsfalle die Transmission und verringert die Reflexion einer solchen Glasscheibe. Diese einfache Glasscheibe ersetzt die aus US 5,260,569 bekannten und teureren Polarisationsstrahlteiler (siehe dort Fig. 1, Bezugszeichen 13) und Viertelwellenplatten (siehe dort Fig. 1, Bezugszeichen 18), welche im Stand der Technik nötig sind, weil in beiden Richtungen ein kollimierter Lichtstrahl, der jeweils die ganze Fläche der Spiegel und Filter braucht, verwendet wird.

Ein weiterer Vorteil dieses erfindungsgemässen Systems besteht darin, dass der Laserstrahl 2 zum Anregen der Probenfluoreszenz wohl parallel zur, aber nicht im Zentrum der optischen Achse 5 und nicht im Zentrum der geometrischen Achse G verlaufen muss. Dies ist vor allem für das Bestimmen einer gegenseitig optimalen Z-Position von Probe 6 und erstem Brennpunkt 9 von Vorteil. Der Laserstrahl verläuft dann vorzugsweise in einem Abstand (A) zu der mit der geometrischen Achse G identischen optischen Achse 5. Es ist also eine "azentrische Beleuchtung" der Probe möglich, wie dies in z.B. den Figuren 2 und 3 dargestellt ist.

Des Weiteren besteht im erfindungsgemässen System die Möglichkeit, ein bevorzugtes Umlenkelement 7 zu verwenden, welches zum Umlenken des Lichtes 2 aus dem ersten Laser 1 in eine zu der optischen Achse 5 parallelen Richtung auf diesen Spiegel 4 einen für den Laserstrahl 2 bestimmten, hochspiegelnden Bereich 21 umfasst und in seinen übrigen Bereichen sowohl für das Licht der ersten 2 als auch der zweiten Wellenlänge 3 im Wesentlichen durchlässig ist. Damit ergibt sich bei der Verwendung eines solchen "Pinspiegels" gegenüber der als Umlenkelement 7 verwendeten, einfachen Glasplatte eine stark verbesserte Ausbeute für das gebündelte Laserlicht zum Anregen der Fluoreszenz der Fluoreszenzfarbstoffe in oder an den Proben 6. Der Verlust von ca. 5% des von der Probe stammenden und am hochspiegelnden Bereich 21 umgelenkten Lichtes fällt hier nicht ins Gewicht.

Um das Gerät kompakter zu machen, kann vorgesehen sein, dass das optische System zudem einen einfachen Spiegel zum Spiegeln der zwischen dem Umlenkelement 7 und dem Spiegel 4 verlaufenden Lichtstrahlen umfasst (nicht gezeigt). Dieser einfache Spiegel ist dann ebenfalls in der geometrischen Achse (G) angeordnet. Allerdings werden in diesem Fall die optische Anordnung 16, der zweite Brennpunkt 17, die Lochblende 18, das erste Spektralfilter 19 und der erste Detektor 20 - entsprechend der Ablenkung durch den einfachen Spiegel - auf einer von G verschiedenen geometrischen Achse G' angeordnet.

Das in Figur 1 dargestellte optische System mit zwei vorzugsweise monochromatischen Lasern unterschiedlicher Wellenlänge umfasst zudem einen zweiten Laser 1', der - zum Anregen von zweiten Fluoreszenzfarbstoffen - zum Licht der ersten Wellenlänge 2 parallel verlaufendes Licht einer dritten Wellenlänge 2' aussendet, damit diese Fluoreszenzfarbstoffe Licht einer vierten Wellenlänge 3' emittieren. Ein zweites Spektralfilter 19' wählt einen Anteil des Lichtes der vierten Wellenlänge 3' aus und ein zweiter Detektor 20' misst die Intensität des vom zweiten Spektralfilter 19' ausgewählten Teils des Lichtes der vierten Wellenlänge 3'. Zudem ist ein Strahlteilerelement 26 vorgesehen, welches für das durch die ersten Fluoreszenzfarbstoffe emittierte und durch die Optik 8 kollimierte Licht 12 der zweiten Wellenlänge 3 zumindest teilweise durchlässig ist und welches zum Spiegeln bzw. Auslenken des Lichts der vierten Wellenlänge 3' aus der geometrischen Achse G in Richtung eines zweiten Detektors 20' ausgebildet ist. Dieses Strahlteilerelement 26 kann als Dichroidspiegel oder beispielsweise auch als 50%-Strahlteiler ausgelegt sein.

Eine Objektbeleuchtung 30 z.B. in Form einer einfachen Lampe, ist vorzugsweise ebenfalls entfernt von der Einheit 10 vorgesehen, damit die abzurasternden Objekte bei Bedarf lichtoptisch betrachtet bzw. abgebildet werden können. Das verwendete Licht wird mittels eines auf den Achsen 5,G angeordneten Dichroidspiegels eingespiesen. Die Spektralfilter 19,19' sind so ausgelegt, dass sie dieses Licht ausfiltern. Ein eigener Detektor (nicht gezeigt) kann vorgesehen sein, um das visuelle Bild der Proben 6 festzuhalten. Alternativ kann auch der Detektor 20 genutzt werden, um die Probe beispielsweise im Fluoreszenzmodus abzurastern.

Figur 2 zeigt einen vertikalen Teilschnitt eines optischen Systems, zum Anregen und Messen von Fluoreszenz an oder in mit Fluoreszenzfarbstoffen behandelten Proben, gemäss einer zweiten Ausführungsform. Dieses optische System umfasst alle Merkmale von Anspruch 1. Für diese zweite, etwas einfachere Ausführungsform ist nur ein monochromatischer Laser 1 vorgesehen. Der Tisch 13 ist zudem in Richtung der Y-Raumachse bewegbar, wobei X- und Y-Achse zumindest näherungsweise parallel zu der Oberfläche 15 eines Probenträgers 14 verlaufen. Die unter der Figur 1 besprochenen Probenträger können alle auch in dieser Ausführungsform eingesetzt werden.

Das Umlenkelement 7 zum Umlenken des Lichtes 2 aus dem ersten Laser 1 in eine zu der optischen Achse 5 parallelen Richtung auf diesen Spiegel 4 umfasst einen für den Laserstrahl 2 bestimmten, hochspiegelnden Bereich 21. In seinen übrigen Bereichen ist das Umlenkelement 7 sowohl für das Licht der ersten 2 als auch der zweiten Wellenlänge 3 im Wesentlichen durchlässig. Der hochspiegelnde Bereich 21 des Umlenkelements 7 ist in einem Abstand A zu der mit der geometrischen Achse G identischen optischen Achse 5 angeordnet, so dass der Strahlengang für das aus dem Laser 1 kommende Licht der ersten Wellenlänge 2 parallel und in dem Abstand A zu diesen Achsen 5,G verläuft.

Eine lichtundurchlässige Blende 22 ist zum zeitweisen Ausblenden eines zum Fokussieren und Anregen benutzten und von der Probe 6 reflektierten Laserstrahls zwischen dem Umlenkelement 7 und der optischen Anordnung 16 angeordnet. Im gezeigten Zustand ist diese Blende 22 in den Strahlengang geschoben.

Das vom Laser 1 kommende, gebündelte Licht 2 wird am hochspiegelnden Bereich 21 des Umlenkelements 7 in Richtung des - vorzugsweise gegenüber der Horizontalen um 45° geneigten Spiegels 4, parallel zu den Achsen 5,G und im Abstand A zu diesen Achsen abgelenkt. Der Spiegel 4 lenkt diesen gebündelten Laserstrahl 2 parallel und im Abstand A zur nun zumindest näherungsweise senkrecht verlaufenden optischen Achse 5 um, worauf der Laserstrahl in der optischen Achse 5 liegenden Brennpunkt 9 gelenkt wird. Der bisher beschriebene Verlauf des Laserstrahls 2 wird für die Fokussierung, d.h. für das Festlegen eines optimalen Arbeitsabstandes zwischen Optik 8 und Probe 6 verwendet. Dabei wird (wie später beschrieben) die gegenseitige Position von Brennpunkt 9 und Probe 6 bestimmt und eingestellt. Der auf den Brennpunkt 9 konzentrierte Fokussierstrahl 25 weist einen Fleckdurchmesser zwischen dem Beugungslimit und 2 mm auf. Ein bevorzugter Fleckdurchmesser beträgt weniger als 15 µm. Der Fokussierstrahl 25 wird von der Probe reflektiert und erreicht in einem Abstand von der optischen Achse 5 wieder den Spiegel 4, welcher diesen Reflexionsstrahl in paralleler Richtung zu den horizontal verlaufenden Achsen 5,G ablenkt.

Zum Bestimmen eines exakten Arbeitsabstandes - der vorzugsweise bis zu 7 mm beträgt, aber auch mehr oder weniger betragen kann - ist diese azentrische Beleuchtung speziell gut geeignet, weil der Laserstrahl in einem Winkel auf die Probe auftrifft, der kleiner ist als 90°. Es ist einsichtig, dass mit abnehmendem Einfallswinkel die Genauigkeit bzw. die Auflösung in Richtung der Z-Achse steigt, während ein Einfallswinkel von 90° die geringste Auflösung in Richtung der Z-Achse erlaubt, weil z.B. unter Umständen nicht festzusteilen ist, in welcher Tiefe sich der Brennpunkt 9 innerhalb einer Probe 6 befindet. Aus dem Gesagten folgt zudem, dass die Auflösung des optischen Systems in Richtung der Z-Achse mit zunehmendem Abstand A ansteigt. Der parallel zu den Achsen 5,G verlaufende Reflexionsstrahl wird durch eine optische Anordnung 16 in den zweiten Brennpunkt 17 gelenkt, wo er die Lochblende 18 durchtritt. Das Spektralfilter ist jetzt vorzugsweise aus dem Strahlengang gezogen oder durch ein Neutraldichtefilter (Graufilter) ersetzt, so dass der Reflexionsstrahl auf dem Detektor 20 auftrifft und von diesem die Intensität des Reflexionsstrahls gemessen werden kann.

Soll der optimale Arbeitsabstand nicht mit der Reflexion, sondern an Hand der Intensität der in oder an den Proben angeregten Fluoreszenz bzw. an Hand von in oder an der Probe 6 erzeugtem, diffusem Streulicht eingestellt werden, so wird die Blende 22 in den Strahlengang geschoben (vgl. Fig. 2) und das Spektralfilter 19 bzw. ein Neutraldichtefilter (Graufilter) vor den Detektor 20 platziert. Der gebündelte Laserstrahl 1 wird dann als Anregungsstrahl 24 verwendet, welcher auf gleiche Weise wie der Fokussierstrahl 25 in den ersten Brennpunkt 9 gelenkt wird. Ein Teil der sich im Wesentlichen kalottenförmig von der Probe 6 ausdehnenden Fluoreszenz wird in der Optik 8 kollimiert (d.h. parallel gerichtet) und vom Spiegel 4 in Richtung der optischen Anordnung 16 abgelenkt. Trotz eines kleinen Verlustes, der im Wesentlichen von der Fläche des hochspiegelnden Bereiches 21 des Umlenkelements 7 und der Blende 22 bestimmt wird, trifft dieses kollimierte Fluoreszenzlicht bei der optischen Anordnung 16 ein und wird im zweiten Brennpunkt 17 fokussiert. Dort durchtritt - je nach dem gewählten Durchmesser der Lochblende 18 - ein gewisser Teil des fokussierten Fluoreszenzlichtes diese Lochblende 18 und das Spektralfilter 19 und wird vom Detektor 20 detektiert. Zum Abrastern der Probe wird der gleiche Strahlengang, wie eben beschrieben, verwendet.

Das erste Spektralfilter 19 ist zwischen der Lochblende 18 und dem ersten Detektor 20 angeordnet. Es kann auch als Fenster im Detektor 20 eingesetzt sein. Bevorzugt ist jedoch das Ausbilden des ersten Spektralfilters 19 als Filterschieber mit beispielsweise fünf unterschiedlichen, untereinander automatisch auswechselbaren Filtern, wobei dieses Spektralfilter 19 manuell gegen einen anderen Filterschieber mit einem anderen Filtersatz austauschbar ist.

Dieses optische System umfasst vorzugsweise einen Computer oder Mikroprozessor zum Aufzeichnen und Verarbeiten der durch den Detektor 20 erfassten Messsignale und zum Ausgeben von diesen Signalen entsprechenden Daten. Dieser Computer oder Mikroprozessor ist zudem vorzugsweise zum Steuern der Bewegungen des Tisches 13 ausgebildet. Der in den Richtungen der X- und/ oder Y- und/oder Z-Achse verschiebbare Tisch 13 ist vorzugsweise zudem um die X- und/oder Y-Achse kippbar ausgebildet.

Nach dem erfindungsgemässen Verfahren wird ein solches optisches System mit einer stetig und nicht durch die Probe verlaufenden, geometrischen Achse G bereitgestellt. Auf dieser geometrischen Achse G wird die optische Anordnung 16, der zweite Brennpunkt 17, die Lochblende 18, das erste Spektralfilter 19 und der erste Detektor 20 - zusammen mit dem Spiegel 4 und dem Umlenkelement 7 - angeordnet. Dabei ist diese geometrische Achse G im Bereich zwischen dem Spiegel 4 und dem ersten Detektor 20 zumindest zum Teil mit der optischen Achse 5 identisch.

Während dem Anregen und Messen der von den Proben 6 emittierten Fluoreszenz wird die Einheit 10 dieses optischen Systems gemäss einer ersten Verwendungsart fixiert. Der Probentisch 13 wird gleichzeitig in Richtung der X- und/oder Y- Achse bewegt, wobei die Y-Achse parallel zu den Achsen 5,G verläuft. Mit dieser Tischbewegung, welche z.B. durch die Teile 13' (X-Bewegung) und 13"' (Y-Bewegung) ausgeführt werden kann, wird bei kontinuierlicher Anregung und Messung ein Linienscan, bei Punktanregung und Punktmessung ein Punktscan, auf oder in den Proben 6 ermöglicht.

Während dem Anregen und Messen der von den Proben 6 emittierten Fluoreszenz wird die Einheit 10 dieses optischen Systems gemäss einer zweiten Verwendungsart in Richtung der Y-Achse hin-und-her bewegt. Der Probentisch 13 wird gleichzeitig fixiert bzw. in Richtung der X-Achse bewegt. Mit diesen Bewegungen der Einheit 10 allein wird bei kontinuierlicher Anregung und Messung ein Linienscan, bei gleichzeitiger Bewegung von Einheit 10 (Y-Bewegung) und Tisch 13 (Bewegung des Teils 13' ergibt X-Bewegung) wird bei kontinuierlicher Anregung und Messung ein Flächenscan auf oder in den Proben 6 ermöglicht. Die Y-Achse verläuft dabei parallel zu den Achsen 5,G. Der oszillierende Linearantrieb 11 für die Einheit 10 ist bevorzugt als "Voice coil" ausgebildet.

Vor dem effektiven Abrastern (Messen) der Proben wird die Z-Position der Probenträger eingestellt.

Als alternative Lichtquelle für die Anregung der Fluoreszenz können Laserpulse oder Lampenblitze verwenden werden. Bevorzugt werden dann diskrete, einzelne Laserpulse oder diskrete Kleinserien von wenigen Laserpulsen, welche die Fluoreszenz an je einem Punkt in oder auf Proben 6 anregt. Speziell beim Messen der Fluoreszenz in Proben, die z.B. in den 1536 Wells einer hochdichten Mikroplatte vorgelegt sind, werden vorzugsweise solche Punktmessungen ausgeführt. Zwischen oder während den Messungen werden dabei Einheit 10 und Probenträger 14 gegeneinander verschoben, wobei vor allem die Verschiebung der Einheit 10 in Richtung der Y-Achse extrem schnell geschehen kann. Das Messen der Fluoreszenz in diesen 1536 Wells, das im Flächenscan mit kontinuierlichem Anregen und Messen mit den derzeit schnellsten Geräten etwa 1 Minute dauert, kann so auf ca. 10 Sekunden verkürzt werden. Bei Mikroplatten mit noch mehr Wells oder noch kleinerem Rastermass ergibt sich eine noch grössere Zeitersparnis.

Für z.B. auf im Wesentlichen flachen Probenträgern 14 immobilisierte Proben 6 wird zum Definieren einer optimalen Z-Position des bewegbaren Tisches 13 bzw. einer Probe 6 - die zwischen dem Umlenkelement 7 und der optischen Anordnung 16 angeordnete, lichtundurchlässige Blende 22 aus dem Strahlengang gezogen. Darauf wird- an Hand einer während einer Z- Bewegung des Tisches 13 durch den ersten Detektor 20 erzeugten und in einem Computer oder Mikroprozessor aufgezeichneten Reihe von Messsingnalen - die dem Maximum dieser Messsignale entsprechende Z-Position des Tisches errechnet und der Tisch 13 in diese Z-Position gefahren. Zum Festlegen des Maximums dieser Messsignale wird bevorzugt der geometrische Mittelpunkt zwischen den Wendepunkten der aufsteigenden und absteigenden Flanke des Messsignals genommen. Dieses Verfahren wird vorzugsweise an zumindest drei Stellen eines Probenträgers durchgeführt und der Tisch 13 - entsprechend den definierten Maxima für diese drei Stellen - so weit wie erforderlich in den Richtungen der X-, Y- und Z-Achse verschoben und um die X- und Y-Achse gekippt. Es ist von Vorteil, wenn dieses Definieren einer optimalen Z-Position mittels eines Computers oder Mikroprozessors durchgeführt wird, welcher die vom Detektor 20 erzeugten Messsignale erfasst und verarbeitet, welcher diesen Signalen entsprechenden Daten ausgibt und zudem die Bewegungen des Tisches 13 steuert.

Figur 3 zeigt einen vertikalen Teilschnitt eines optischen Systems, zum Anregen und Messen von Fluoreszenz an oder in mit Fluoreszenzfarbstoffen behandelten Proben, gemäss einer dritten Auführungsform. Dieses optische System umfasst alle Merkmale von Anspruch 1. Für diese dritte Ausführungsform können ein oder mehrere vorzugsweise monochromatische Laser 1,1' vorgesehen sein. Der Tisch 13 ist vorzugsweise in Richtung der X-, Y- und Z-Raumachse bewegbar, wobei X- und Y-Achse zumindest annähernd parallel zu der Oberfläche 15 eines Probenträgers 14 verlaufen. Zudem ist der Tisch 13 bevorzugt um die X- und/oder Y-Achse kippbar. Die unter der Figur 1 und 2 besprochenen Probenträger können alle auch in dieser Ausführungsform eingesetzt werden.

Das Umlenkelement 7 zum Umlenken des Lichtes 2 aus dem ersten Laser 1 in eine zu der optischen Achse 5 parallelen Richtung auf diesen Spiegel 4 umfasst einen für den Laserstrahl 2 bestimmten, hochspiegelnden Bereich 21. In seinen übrigen Bereichen ist das Umlenkelement 7 sowohl für das Licht der ersten 2 als auch der zweiten Wellenlänge 3 im Wesentlichen durchlässig. Der hochspiegelnde Bereich 21 des Umlenkelements 7 ist im Zentrum der zur der geometrischen Achse G identischen optischen Achse 5 angeordnet, so dass der Strahlengang für das aus dem Laser 1 kommende Licht der ersten Wellenlänge 2 parallel und im Zentrum dieser Achsen 5,G verläuft.

Dieses optische System umfasst ein Trennelement 23 zum Auftrennen des aus dem Laser 1 kommenden Lichtes der ersten Wellenlänge 2 in einem Anregungsstrahl 24 für die Fluoreszenz und einen zu diesem Anregungsstrahl 24 parallelen Fokussierstrahl 25. Eine lichtundurchlässige Blende 22 ist zum zeitweisen Ausblenden eines zum Anregen der Fluoreszenz benutzten Laserstrahls zwischen dem Umlenkelement 7 und dem Trennelement 23 angeordnet. Dieses Trennelement 23 kann, falls nur ein Laser 1 verwendet werden soll, als einfache, planparallele Glasplatte mit rückseitiger Vollverspiegelung ausgebildet sein.

Das gebündelte Licht 2 aus dem Laser 1 wird zu etwa 4% an der unverspiegelten ersten Oberfläche des Trennelements 23 in Richtung des Umlenkelements 7 reflektiert. Dort trifft dieser Laserstrahl auf einen unverspiegelten Bereich und wird wieder zu ca. 4% und in einem Abstand A parallel zu den Achsen 5,G in Richtung des Spiegels 4 abgelenkt. Das vom Laser 1 kommende, gebündelte Licht 2 wird zudem an der hinteren Oberfläche des Trennelements 23 gespiegelt. Bei einer rückseitig vollverspiegelten Glasplatte werden ca. 96% des Laserlichtes 2 auf optischen Achse 5 auf das Umlenkelement 7 gelenkt, wo das Licht 2 auf dessen hochspiegelnden Bereich 21 trifft. Das Trennelement 23 erfüllt somit die Aufgabe, den Laserstrahl 2 in einen auf der optischen Achse 5 verlaufenden Anregungsstrahl 24 und einen dazu parallel in einem Abstand A verlaufenden Fokussierstrahl 25 aufzutrennen.

Als alternatives Trennelement kann auch eine einfache, planparallele Glasplatte, die schräg in den Strahlengang gestellt wird, verwendet werden. Die Position dieser planparallelen Glasplatte soll sich zwischen dem Laser 1 und dem Umlenkelement 7 befinden; vorzugsweise ist diese planparallele Glasplatte jedoch zwischen dem Laser 1 und dem Trennelement 23 angeordnet (nicht gezeigt). Der grösste Anteil des Laserstrahles tritt mit leichtem Parallelversatz durch die Glasplatte. An der hinteren Grenzfläche Glas/Luft werden dabei ca. 4% in die Glasplatte zurückreflektiert. Wiederum ein Anteil von ca. 4% des reflektierten Strahles erfährt anschliessend an der vorderen Grenzfläche eine erneute Reflexion. Dies führt dazu, dass ein kleiner Anteil des Laserlichtes parallel zum HauptStrahl in Richtung des Umlenkelements 7 gelenkt wird. In diesem Falle ist das Trennelement 23 als Vorderflächenspiegel ausgebildet und dient nicht zur Auftrennung des Strahles.

Falls zwei oder mehr monochromatische Laser unterschiedlicher Wellenlänge verwendet werden sollen, wird als Trennelement 23 eine planparallele als Dichroidspiegel ausgebildete Platte verwendet. Jedem Laser kann dann - entsprechend der Wellenlänge seines Lichtes - ein eigenes Trennelement 23,23' zugeordnet werden, welches von den übrigen Lasern durchstrahlbar ist. Diese Trennelemente sind dann bevorzugt auf einer gemeinsamen optischen Achse angeordnet und lenken die Laserstrahlen in Richtung eines einzigen Umlenkelements 7, wie dies aus Fig. 1 ersichtlich ist.

Das von den Lasern 1.1' kommende, gebündelte Licht 2,2' wird am hochspiegelnden Bereich 21 des Umlenkelements 7 in Richtung des - vorzugsweise gegenüber der Horizontalen um 45° geneigten - Spiegels 4 abgelenkt.

Vorzugsweise der lichtstärkere der beiden durch das Trennelement 23 erzeugten Strahlen trifft somit auf den hochspiegelnden Bereich 21 des Umlenkelements 7 auf, wo er in Richtung der optischen Achse 5 und der dazu identischen, geometrischen Achse G auf den Spiegel 4 gelenkt wird. Dieser Anregungsstrahl 24, der zum Fokussieren mittels eingeschobener Blende 22 vorzugsweise ausgeblendet wird, wird vom Spiegel 4 in Richtung der zumindest näherungsweise senkrecht verlaufenden optischen Achse 5 abgelenkt, durchstösst die Optik 8 und trifft in der optischen Achse 5 auf die Probe 6 auf. Der zumindest näherungsweise senkrecht auf der Probe 6 auftreffende Anregungsstrahl 24 ist speziell geeignet, die Fluoreszenz in Proben 6 anzuregen, welche in eine Flüssigkeit getaucht sind oder in flüssiger Form vorliegen. Solche Proben werden vorzugsweise in den Wells von Mikroplatten zur Untersuchung vorgelegt. Selbst wenn hochdichte Mikroplatten mit nicht nur 96 sondern mit 384, 1536 oder mehr Wells verwendet werden sollen, erreicht der zumindest näherungsweise senkrechte Anregungsstrahl immer die Proben 6.

Im Gegensatz zu der Verwendung von bekannten und teuren, sogenannten "f(θ)-Optiken" zum Erreichen eines zumindest beinahe senkrecht auf eine Probe 6 einfallenden Anregungsstrahls ermöglicht die vorliegende Erfindung den Einsatz von wesentlich kostengünstigeren optischen Elementen für den Spiegel 4 und die Optik 8.

Der zweite, vorzugsweise schwächere Lichtstrahl trifft somit auf einen unverspiegelten Bereich des Umlenkelements 7, wo er (zu ca. 4%) parallel zu der Richtung der Achsen 5,G und im Abstand A verlaufend auf den Spiegel 4 gelenkt wird. Dieser Fokussierstrahl 25 ist vorzugsweise nur bei eingeschobener Blende 22 aktiv und wird vom Spiegel 4 parallel und in einem Abstand A zur Richtung der zumindest näherungsweise senkrecht verlaufenden optischen Achse 5 abgelenkt. Die Optik 8 lenkt den Fokussierstrahl auf den in der zumindest näherungsweise senkrechten optischen Achse 5 liegenden Brennpunkt 9.

Die oben zu der Verwendung des Fokussierstrahls (vgl. zweite Ausführungsform, Fig. 2) und an Hand der Reflexion ausgeführten Überlegungen zu der Fokussierung, d.h. zum Festlegen eines optimalen Arbeitsabstandes zwischen Optik 8 und Probe 6 gelten sinngemäss auch hier. Dasselbe gilt auch für die Fokussierung mittels Messung der Fluoreszenz bzw. an Hand von in oder an der Probe 6 erzeugtem, diffusem Streulicht, wobei bei Verwendung der hier beschriebenen dritten Ausführungsform und beim Messen der Fluoreszenz die Blende 22 aus dem Strahlengang zurückgezogen bleibt.

Ein Teil der sich im Wesentlichen kalottenförmig von der Probe 6 ausdehnenden Fluoreszenz wird in der Optik 8 kollimiert (d.h. parallel gerichtet) und vom Spiegel 4 in Richtung der optischen Anordnung 16 abgelenkt. Trotz eines kleinen Verlustes, der im Wesentlichen von der Fläche des hochspiegelnden Bereiches 21 des Umlenkelements 7 bestimmt wird, trifft dieses kollimierte Fluoreszenzlicht bei der optischen Anordnung 16 ein und wird im zweiten Brennpunkt 17 fokussiert. Dort durchtritt - je nach dem gewählten Durchmesser der Lochblende 18 - ein gewisser Teil des fokussierten Fluoreszenzlichtes diese Lochblende 18 und das Spektralfilter 19 und wird vom Detektor 20 detektiert. Zum Abrastern der Probe wird der gleiche Strahlengang, wie eben beschrieben, verwendet.

Der hier immer in der optischen Achse 5 verlaufende Anregungsstrahl wird von der Probe 6 reflektiert und verläuft auf dem entgegengesetzten Wege in Richtung der Laser 1,1'.

Bei Verwendung von zwei monochromatischen Lasern 1,1' wird bevorzugt ein Strahlteilerelement 26 zwischen der Lochblende 18 und dem ersten Detektor 20 (vgl. Fig. 3) angeordnet. Eine erste Sammelliste 28 dient zum Sammeln des durch die Lochblende 18 durchgehenden Lichtes der zweiten Wellenlänge 3. Dem Strahlteilerelement 26 wird eine zweite Sammellinse 28' nachgeordnet, mit welcher das durch die Lochblende 18 durchgehenden Licht der vierten Wellenlänge 3' gesammelt und dem zweiten Detektor 20' mit dem zweiten Spektralfilter 19' zugeleitet wird.

Gegebenenfalls können weitere optische Elemente (Linsen, Spiegel, Blenden) zur optimierten Strahlführung hinsichtlich Signalausbeute und Filterwirkung zwischen der Lochblende 18 und dem Detektor 20 - vorzugsweise zwischen dem Spektralfilter 19 und dem Detektor 20 - platziert werden.

Die Bezugszeichen in den verschiedenen Figuren bezeichnen jeweils die gleichen Merkmale. Beliebige Kombinationen der gezeigten bzw. beschriebenen Ausführungsformen gehören zum Umfang der vorliegenden Erfindung.

Zu den die vorliegende Erfindung vom Stand der Technik unterscheidenden Vorteilen gehören:
- der Einsatz von Probenträgern 14 in der Grösse einer Mikroplatte oder von noch grösseren Probenträgern wird ermöglicht;
- der Arbeitsabstand kann bis zu 7 mm oder mehr betragen;
- die numerische Apertur des Objektivs liegt über einem Wert von 0.4 und beträgt bis zu 0.6 oder mehr;
- insbesondere dank dem Einsatz eines Gegenschwingers 29 kann die Oszillationsamplitude D bis zu 25 mm oder mehr betragen;
- die zumindest näherungsweise senkrechte Anregung der Proben wird mit einer kostengünstigen und weitgehend aberrationsfreien Optik erreicht;
- das Umlenkelement 7 kann als einfache Glasscheibe oder als Pinspiegel ausgebildet sein und ermöglicht als einfaches optisches Element das Trennen von Anregungsstrahl und Fluoreszenz;
- die Verwendung eines Umlenkelements 7 in der Form eines Pinspiegels ermöglicht den gleichzeitigen Einsatz von mehreren monochromatischen Lasern unterschiedlicher Wellenlänge und die Vermessung einer nahezu unbegrenzten Zahl verschiedener Fluoreszenzfarbstoffe unterschiedlicher Emissionswellenlänge;
- der Austausch von zwei monochromatischen Lasern unterschiedlicher Wellenlänge bedingt keine weiteren Umbauten am optischen System;
- die Anwendung der offenbarten unterschiedlichen Fokussiermodi in Kombination mit einer Lochblende unterschiedlichen Durchmessers erlaubt das in den Fokus bringen, Anregen und Vermessen der Fluoreszenz verschiedenster Proben und Probenformate.

## Patentansprüche

1. Optisches System, zum Anregen und Messen von Fluoreszenz an oder in mit Fluoreszenzfarbstoffen behandelten Proben, umfassend:
a) zumindest einen ersten Laser (1), der - zum Anregen von ersten Fluoreszenzfarbstoffen an oder in einer Probe (6). Licht einer ersten Wellenlänge (2) aussendet, damit diese ersten Fluoreszenzfarbstöffe Licht einer zweiten Wellenlänge (3) emittieren;
b) einen Spiegel (4), zum Umlenken des aus dem ersten Laser (1) kommenden und parallel zu einer optischen Achse (5) auf den Spiegel (4) einfallenden, gebündelten Lichtes der ersten Wellenlänge (2) In Richtung einer Probe (6);
c) ein Umlenkelement (7) zum Umlenken des gebündelten Lichtes (2) aus dem ersten Laser (1) auf diesen Splegel (4);
d) eine Optik (8), zum Bilden eines ersten Brennpunktes (9) an oder in der Probe (6) für das aus dem ersten Laser (1) einfallende und durch den Spiegel (4) umgelenkte, gebündelte Licht der ersten Wellenlänge (2);
e) eine Einheit (10), welche den Spiegel (4) und die Optik (8) umfasst, wobei Spiegel und Optik in der Einheit gegeneinander unbeweglich angeordnet sind und diese Einheit (10) linear entlang einer geometrischen Achse (G) hin-und-her beweglich angeordnet und mit einem oszillierenden Unearantrieb (11) wirkverbunden ist, wobei die Optik (8) zudem als Kollimator für das von den ersten Fluoreszenzfarbstoffen an oder in der Probe (6) emittierte Ucht zweiter Wellenlänge (3) und der Spiegel (4) zudem zum Umlenken dieses kollimierten Lichtes (12) entgegengesetzt zu der Eintfallsrichtung des gebündelten Uchtes erster Wellenlänge (2) und parallel zu der geometrischen Achse (G) ausgebildet sind;
f) einen zumindest in Richtung der X- und Z-Raumachsen eines im wesentlichen rechtwinkligen Koordinatensystems bewegbaren Tisch (13) zur Aufnahme von Probenträgern (14) für mit zumindest einem ersten Fluoreszenzfarbstoff behandelten Proben (6) und zum Ausrichten der Probe (6) gegenüber dem ersten Brennpunkt (9);
g) eine optische Anordnung (16) zum Abbilden eines zweiten Brennpunktes (17) mit dem durch die ersten Fluoreszenzfarbstoffe an oder In der Probe (6) emittierten, durch die Optik (8) kollimierten und den Spiegel (4) umgelenkten Licht der zweiten Wellenlänge (3);
h) eine im zweiten Brennpunkt (17) angeordnete Lochblende (18) zum Ausblenden von Licht der zweiten Wellenlänge (3), welches weiter entfernt als in einem bestimmten Abstand vom Brennpunkt (17) auf diese Lochblende (18) auftrifft;
i) ein erstes Spektralfilter (19) zum Auswählen des durch die Lochblende (18) durchgehenden Uchtes der zweiten Wellenlänge (3); und
j) einen ersten Detektor (20) zum Messen der Intensität des von der Lochblende (18) durchgelassenen und vom ersten Spektralfilter (19) ausgewählten Lichtes der zweiten Wellenlänge (3),
wobei die geometrische Achse (G) stetig ist und nicht durch die Probe (6) verläuft und die optische Anordnung (16), der zweite Brennpunkt (17), die Lochblende (18), das erste Spektralfilter (19) und der erste Detektor (20) - zusammen mit dem Spiegel (4) und dem Umlenkelement (7) - auf dieser geometrischen Achse (G) angeordnet sind, die im Bereich zwischen dem Spiegel (4) und dem ersten Detektor (20) zumindest teilweise mit der optischen Achse (5) identisch ist, und wobei das Umlenkelement (7) zum Umlenken des gebündelten Lichtes (2) aus dem ersten Laser (1) in eine zu der geometrischen Achse (G) parallelen Richtung auf diesen Spiegel (4) einen für den gebündelten Laserstrahl (2) bestimmten, hochspiegelnden Bereich (21) umfasst und in seinen übrigen Bereichen sowohl für das Licht der ersten (2) als auch der zweiten Wellenlänge (3) im Wesentlichen durchlässig ist.

2. System nach Anspruch 1, **dadurch gekennzeichnet, dass** der Tisch (13), zudem in Richtung der Y-Raumachse bewegbar ist, wobei X- und Y-Achse zumindest näherungsweise parallel zu der Oberfläche (15) eines Probenträgers (14) liegen.

3. System nach einem der Ansprüche 1 oder 2, **dadurch gekennzeichnet, dass** der hochspiegelnde Bereich (21) des Umlenkelements(7) in einem Abstand (A) zu der mit der geometrischen Achse (G) identischen optischen Achse (5) angeordnet ist, so dass der Strahlengang für das aus dem Laser (1) kommende, gebündelte Licht der ersten Wellenlänge (2) parallel und in dem Abstand (A) zu diesen Achsen (5,G) verläuft.

4. System nach Anspruch 3, **dadurch gekennzeichnet, dass** eine lichtundurchlässige Blende (22) - zum zeitweisen Ausblenden eines zum Fokussieren und Anregen benutzten und von der Probe (6) reflektierten Laserstrahls **- zwischen dem Umlenkelement** (7) und der optischen Anordnung (16) angeordnet ist.

5. System nach einem der vorhergehenden Ansprüche, **dadurch gekennzeichnet, dass** es zudem ein Trennelement (23) zum Auftrennen des aus dem Laser (1) kommenden Uchtes der ersten Wellenlänge (2) in einem Anregungsstrahl (24) für die Fluoreszenz und einen zu diesem Anregungsstrahl (24) parallelen Fokussierstrahl (25) umfasst.

6. System nach Anspruch 5, **dadurch gekenpizeichnet, dass** eine lichtundurchlässige Blende (22) - zum zeitweisen Ausblenden eines zum Anregen der Fluoreszenzfarbstoffe benutzten Laserstrahls - zwischen dem Umlenkelement (7) und dem Trennelement (23) angeordnet ist.

7. System nach einem der vorhergehenden Ansprüche, **dadurch gekennzeichnet, dass** das erste Spektralfilter (19) zwischen der Lochblende (18) und dem ersten Detektor (20) angeordnet ist.

8. System nach einem der vorhergehenden Ansprüche, welches umfasst:
k) einen zweiten Laser (1'), der - zum Anregen von zweiten FluoreszenzfärbstofFen - zum Licht der ersten:Wellenlänge (2) parallel verlaufendes Licht einer dritten Wellenlänge (2') aussendet, damit diese Fluoreszenzfarbstoffe Licht einer vierten Wellenlänge (3') emittieren;
l) ein zweites Spektralfilter (19') zum Auswählen des Lichtes der vierten Wellenlänge (3'); und
m) einen zweiten Detektor (20') zum Messen der Intensität des vom zweiten Spektralfilter (19') ausgewählten Lichtes der vierten Wellenlänge (3'),
**dadurch gekennzeichnet, dass** es zudem ein Strahlteilerelement (26) umfasst, welches für das durch die ersten fluoreszenzfarbstoffe emittierte und durch die Optik (8) kollimierte Licht (12) der zweiten Wellenlänge (3) zumindest teilweise durchlässig ist und welches zum Spiegeln bzw. Auslenken des Lichts der vierten Wellenlänge (3') aus der geometrischen Achse (G) In Richtung eines zweiten Detektors (20') ausgebildet ist.

9. System nach Anspruch 1 oder 8, **dadurch gekennzeichnet, dass** es zudem zumindest eine Sammellinse (28,28') zum Sammeln des durch die Lochblende (18) durchgehenden Lichtes der zweiten (3) bzw. vierten Wellenlänge (3') umfasst:

10. System nach Anspruch 8 oder 9, **dadurch gekennzeichnet, dass** das Strahlteilerelement (26) zwischen der Lochblende (18) und dem Detektor (20) angeordnet ist.

11. System nach einem der vorhergehenden Ansprüche, **dadurch gekennzeichnet, dass** der vom Probentisch (13) aufnehmbare Probenträger (14) als Objektträger, insbesondere aus Kunststoff; Glas, Silizium, pyrolytischem Graphit und dergleichen, ausgebildet ist.

12. System nach einem der Ansprüche 1 bis 10, **dadurch gekennzeichnet, dass** der vom Probentisch (13) aufnehmbare Probenträger (14) als Mikroplatte, insbesondere mit 96, 384, 1536 oder mehr Wells, ausgebildet ist.

13. System nach einem der Ansprüche 1 bis 10, **dadurch gekennzetehnet,** dass der vom Probentisch (13) aumehmbarc Probenträger (14) als Rahmen (31) zum Aufriehmen und Halten von mehreren Objektträgern, insbesondere aus Kunststoff, Glas, Silizium, pyrolytischem Graphit und dergleichen, ausgebildet ist und die Aussenmasse einer Mikröplatte äufweist.

14. System nach einem der vorhergehenden Ansprüche, **dadurch gekennzeichnet dass** die Einheit (10) - während dem Anregen und Messen der von den Proben (6) emittierten Fluoreszenz - fixierbar ist, und dass der Probentisch (13) gleichzeitig in Richtung der X- und/oder Y-Achse bewegbar ausgebildet ist, wobei die Y-Achse parallel zu den Achsen (5,G) verläuft.

15. System nach einem der vorhergehenden Ansprüche, **dadurch gekennzeichnet, dass** der Probentisch (13) - zum Anregen und Messen der von den Proben (6) emittlerten Fluoreszenz - in Richtung der X-Achse bewegbar ausgebildet ist, und dass die Einheit (10) gleichzeitig In Richtung der Y-Achse hin-und-her bewegbar ist, wobei die Y-Achse parallel zu den Achsen (5,G) verläuft.

16. System nach Anspruch 15, **dadurch gekennzeichnet, dass** der oszillierende Linearantrieb (11) als "Voice coil" ausgebildet ist.

17. System nach Anspruch 14 oder 15, **dadurch gekennzeichnet, dass** die Einheit (10) zudem einen Gegenschwinger (29) umfasst, welcher - zum Absorbieren von Schwingungen der Einheit - im Gegentakt zum Linearantrieb (11) in Richtung der Y-Achse bewegbar Ist.

18. System nach einem der vorhergehenden Ansprüche, **dadurch gekennzeichnet, dass** die Lochblende (18) für verschiedene Lochgrössen auswechselbar ausgebildet ist.

19. System nach einem der vorhergehenden Ansprüche, **dadurch gekennzeichnet, dass** das erste Spektralfilter (19) als Filterschieber mit wenigstens zwei unterschiedlichen, unterelnander automatisch auswechselbaren Filtern ausgebildet ist und dieser Filterschieber manuell gegen einen anderen Filterschieber austauschbar ausgebildet ist.

20. System nach einem der Ansprüche 8 bis 19, **dadurch gekennzeichnet, dass** das Strahlteilerelement (26) als Schlittenschieber mit auswechselbaren Spiegeln ausgebildet ist.

21. System nach einem der vorhergehenden Anspruche, **dadurch gekennzeichnet, dass** es einen Computer oder Mikroprozessor zum Aufzeichnen und Verarbeiten der durch Detektoren (20,20') erfasste Messsignale und zum Ausgeben von diesen Signalen entsprechenden Daten umtässt.

22. System nach Anspruch 21, **dadurch gekennzeichnet, dass** der Computer oder Mikroprozessor zudem zum Steuern der Bewegungen des Tisches (13) ausgebildet ist, wobei der Tisch (13) In den Richtungen der X- und/oder Y- und/oder Z-Achse verschiebbar sowie um die X- und/oder Y-Achse kippbar ausgebildet Ist.

23. Verfahren zum Anregen und Messen von Fluoreszenz an oder in mit Fluoreszenzfärbstoffen behandelten Proben mit einem optischen System, bei weichem zumindest:
a) ein erster Laser (1), der - zum Anregen dieser Fluoreszenzfarbstoffe-Ucht einer ersten wellenlänge (2) aussendet, damit diese Fluoreszenzfarbstoffe Licht einer zweiten Wellenlänge (3) emittieren;
b) ein Spiegel (4), zum Umlenken des aus dem ersten Laser (1) kommenden und parallel zu einer optischen Achse (5) auf den Spiegel (4) einfallenden, gebündelten Lichtes der ersten Wellenlänge (2) in Richtung einer Probe (6);
c) ein Umlenkelement (7) zum Umlenken des gebündelten Lichtes (2) aus dem ersten Laser (1) auf diesen Spiegel (4);
d) eine Optik (8), zum Bilden eines ersten Brennpunktes (9) an oder in der Probe (6) für das aus dem ersten Laser (1) einfallende und durch den Spiegel (4) umgelenkte, gebündelte Licht der ersten Wellenlänge (2);
e) eine Einheit (10), welche den Spiegel (4) und die Optik (8) umfasst, wobei Spiegel und Optik in der Einheit gegeneinander unbeweglich angeordnet sind und diese Einheit (10) linear entlang der einer geometrischen Achse (G) hin-und-her beweglich angeordnet und mit einem oszillierenden Linearantrieb (11) wirkverbunden ist, wobei die Optik (8) zudem als Kollimator für das von den Fluoreszenzfarbstoffen an oder in der Probe (6) emittierte Licht zweiter Wellenlänge (3) und der Spiegel (4) zudem zum Umlenken dieses kollimierten Lichtes (12) entgegengesetzt zu der Einfallsrichtung des gebündelten Lichtes erster Wellenlänge (2) und parallel zu der geometrischen Achse (G) ausgebildet sind;
f) ein zumindest in Richtung der X- und Z-Raumachsen eines im wesentlichen rechtwinkligen Koordinatensystems bewegbarer Tisch (13), zur Aufnahme von Probenträgern (14) mit zumindest mit einem Fluoreszenzfarbstoff behandelten Proben (6), wobei die X-Achse zumindest näherungsweise parallel zu der Oberfläche (15) eines Probenträgers (14) verläuft, welche - zum Ausrichten der Probe (6) gegenüber dem ersten Brennpunkt (9) - mittels des Tisches (13) in Richtung der Z-Achse bewegbar ist;
g) eine optische Anordnung (16) zum Abbilden eines zweiten Brennpunktes (17) mit dem durch die Fluoreszenzfarbstoffe an oder in der Probe emittierten, durch die Optik (8) kollimierten und den Spiegel (4) umgelenkten Licht der zweiten Wellenlänge (3);
h) eine im zweiten Brennpunkt (17) angeordnete Lochblende (18) zum Ausblenden von Ucht der zweiten Wellenlänge (3), welches weiter entfernt als in einem bestimmten Abstand vom Brennpunkt (17) auf diese Lochblende (18) auftrifft;
i) ein erstes Spektralfilter (19) zum Auswählen des durch die Lochblende (18) durchgehenden Lichtes der zweiten Wellenlänge (3); und
j) ein erster Detektor (20) zum Messen der Intensität des von der Lochblende (18) durchgelassenen und vom ersten Spektralfilter (19) ausgewählten Lichtes der zweiten Wellenlänge (3);
verwendet wird, wobei die geometrische Achse (G) stetig ist und nicht durch die Probe verläuft und die optische Anordnung (16), der zweite Brennpunkt (17), die Lochblende (18), das erste Spektralfilter (19) und der erste Detektor (20) - zusammen mit dem Spiegel (4) und dem Umlenkelement (7) - auf dieser geometrischen Achse (G) angeordnet wird, die im Bereich zwischen dem Spiegel (4) und dem ersten Detektor (20) zumindest zum Teil mit der optischen Achse (5) Identisch ist, und bei welchem mit dem Umlenkelement (7), weiches einen für den gebündelten Laserstrahl (2) bestimmten, hochspiegelnden Bereich (21) umfasst und in seinen übrigen Bereichen sowohl für das Licht der ersten (2) als auch der zweiten Wellenlänge (3) im Wesentlichen durchlässig ist, gebündeltes Licht (2) aus dem ersten Laser (1) In eine zu der geometrischen Achse (G) parallelen Richtung auf diesen Spiegel (4) umgelenkt wird.

24. Verfahren nach Anspruch 23, **dadurch gekennzeichnet, dass** das der hochspiegelnde Bereich (21) des Umlenkelements (7) in einem Abstand (A) zu der mit der geometrischen Achse (G) Identischen optischen Achse (5) angeordnet wird, so dass der Strahlengang für das aus dem Laser (1) kommende, gebündelte Licht der ersten Wellenlänge (2) parallel und in dem Abstand (A) zu diesen Achsen (5,G) verläuft.

25. Verfahren nach einem der Ansprüche 23 oder 24, **dadurch gekennzeichnet, dass** - zum Definieren einer optimalen Z-Position des bewegbaren Tisches (13) bzw. einer Probe (6) - eine zwischen dem Umlenkelement (7) und der optischen Anordnung (16) angeordnete, lichtundurchlässige Blende (22) aus dem Strahlengang gezogen wird und bei dem - an Hand einer während einer Z-Bewegung des Tisches (13) durch den ersten Detektor (20) erzeugten und in einem Computer oder Mikroprozessor aufgezeichneten Reihe von Messsignaien - dfe dem Maximum dieser Messsignale entsprechende Z-Position des Tisches errechnet und der Tisch (13) in diese Z-Position gefahren wird.

26. Verfahren nach Anspruch 23, **dadurch gekennzeichnet, dass -** zum Definieren einer optimalen Z-Position des bewegbaren Tisches (13) bzw, einer Probe (6) - eine zwischen dem Umlenkelement (7) und dem Trennelement (23) angeordnete, lichtundurchlässige Blende (22) in den Strahlengang geschoben wird und bei dem - an Hand einer während einer Z-Bewegung des Tisches (13) durch den ersten Detektor (20) erzeugten und in einem Computer oder Mikroprozessor aufgezeichneten Reihe von Messsignalen - die dem Maximum dieser Messsignale entsprechende Z-Posltion des Tisches errechnet und der Tisch (13) in diese Z-Position gefahren wird.

27. Verfahren nach Anspruch 25 oder 26, **dadurch gekennzeichnet, dass** zum Festlegen des Maximums dieser Messsignale der geometrische Mittelpunkt zwischen den Wendepunkten der aufsteigenden und absteigenden Flanke des Messsignals genommen wird.

28. Verfahren nach einem der Ansprüche 25 bis 27, **dadurch gekennzeichnet, dass** dieses Verfahren an zumindest drei Stellen eines Probenträgers durchgeführt wird und der Tisch (13) - entsprechend den definierten Maxima für diese drei Stellen - so weit wie erforderlich In den Richtungen der X-, Y- und Z-Achse verschoben und um die X- und Y-Achse gekippt wird.

29. Verfahren nach Anspruch 28, **dadurch gekennzeichnet, dass** es mittels eines Computers oder Mikroprozessors durchgeführt wird, welcher die von Detektoren (20,20') erzeugten Messsignale erfasst und verarbeitet, weicher diesen Signalen entsprechenden Daten ausgibt und zudem die Bewegungen des Tisches (13) steuert.

30. Verfahren nach einem der Ansprüche 23 bis 29, **dadurch gekennzeichnet, dass** der Tisch (13) - vor dem Messen der Fluoreszenz an bzw. in zumindest einer Probe (6) - in Richtung der X- und/oder Y-Achse verschoben und zum Anregen und Messen der Fluoreszenz - unter gleichzeitigem Festhalten der Einheit (10) - angehalten wird.

31. Verfahren nach einem der Ansprüche 23 bis 29, **dadurch gekennzeichnet, dass** der Tisch (13) - während dem Anregen und Messen der Fluoreszenz an bzw. in zumindest einer Probe (6) und - unter gleichzeitigem Festhalten der Einheit (10) - In Richtung der X- und/oder Y-Achse verschoben wird.

32. Verfahren nach einem der Ansprüche 23 bis 29, **dadurch gekennzeichnet, dass -** zum Anregen und Messen der Fluoreszenz an bzw. In zumindest einer Probe (6) - unter gleichzeitiger Oszillation der Einheit (10) in Richtung der Y-Achse - der Tisch (13) festgehalten wird.

33. verfahren nach einem der Ansprüche 23 bis 29, **dadurch gekennzeichnet, dass -** zum Anregen und Messen der Fluoreszenz an bzw. in zumindest einer Probe (6) - unter gleichzeitiger Oszillation der Einheit (10) in Richtung der Y-Achse - der Tisch (13) In Richtung der X-Achse linear verschoben wird.

34. Verfahren nach einem der Ansprüche 30 bis 33, **dadurch gekennzeichnet, dass** die entsprechenden Detektorsignale im Computer oder Mikroprozessor aufgezeichnet und verarbeitet werden.

35. Verfahren nach einem der Ansprüche 30 bis 33, **dadurch gekennzeichnet, dass** die lichtundurchlässige Blende (22) in den Strahlengang geschoben bzw. aus diesem entfernt wird.

36. Verfahren nach einem der Ansprüche 30 bis 35, **dadurch gekennzeichnet, dass -** das Anregen und Messen der Fluareszenz an bzw. in einer Probe (6) bei einer gemäss den Ansprüchen 27 bis 31 optimierten Z-Position des bewegbaren Tisches (13), Probenträgers (14) bzw. einer Probe (6) ausgeführt wird und die entsprechenden Detektorsignale im Computer oder Mikroprozessor aufgezeichnet und verarbeitet werden.

37. Verfahren nach einem der Ansprüche 23 bis 36, **dadurch gekennzeichnet, dass** pro Probe (6) nur ein Lichtblitz bzw. wenige diskrete Uchtblitze zur Anregung der Fluoreszenz abgegeben werden.

38. Verfahren nach einem der Ansprüche 23 bis 37, **dadurch gekennzeichnet, dass** mehrere Laser zum Erzeugen von gebündeltem Anregungslicht unterschiedlicher Wellenlänge in oder an mehreren Fluoreszenzfarbstoffen und mehrere Detektoren zum Messen der entsprechenden Signale verwendet werden.

39. Verfahren nach einem oder mehreren der Ansprüche 23 bis 38, **dadurch gekennzeichnet, dass** Signale von zumindest zwei Lasern, Fluoreszenzfarbstoffen und Detektoren aufgezeichnet, verarbeitet und superponiert ausgegeben werden.

## Claims

1. Optical system for the excitation and measurement of fluorescence on or in samples treated with fluorescent dyes, comprising:
a) at least one first laser (1) which, for the purpose of exciting first fluorescent dyes on or in a sample (6), emits light of a first wavelength (2) so that these first fluorescent dyes emit light of a second wavelength (3);
b) a mirror (4) to deflect the bundled light of the first wavelength (2) coming from the first laser (1) and falling parallel to an optical axis (5) on the mirror (4) in the direction of a sample (6);
c) a deflector element (7) to deflect the bundled light (2) from the first laser (1) on to this mirror (4);
d) an objective (8) to form a first focal point (9) on or in the sample (6) for the incident bundled light of the first wavelength (2) from the first laser (1) deflected by the mirror (4);
e) a unit (10) comprising the mirror (4) and the objective (8), such that mirror and objective are immovably fixed relative to each other and that this unit (10) is arranged so that it can be moved back and forth along a geometrical axis (G) and is functionally linked to an oscillating linear drive (11), the objective (8) being further so designed as to act as a collimator for the light of the second wavelength (3) emitted by the first fluorescent dyes on or in the sample (6) and the mirror (4) being so designed that it deflects this collimated light (12) in a direction opposite to the direction of incidence of the bundled light of the first wavelength (2) and parallel to the geometrical axis (G);
f) a table (13) which can be moved at least along the X and Y spatial axes of an essentially right-angled coordinate system, designed to receive sample carriers (14) for samples (6) treated with at least one first fluorescent dye and to align the sample (6) opposite the first focal point (9);
g) an optical array (16) for the formation of a second focal point (17) with the light of the second wavelength (3) emitted by the first fluorescent dyes on or in the sample (6), collimated by the objective (8) and deflected by the mirror (4);
h) an aperture (18) positioned at the second focal point (17) to exclude the light of the second wavelength (3) which strikes this aperture (18) from further away than a specified distance from the focal point (17);
i) a first spectral filter (19) to select the light of the second wavelength (3) passing through the aperture (18); and
j) a first detector (20) for measuring the intensity of the light of the second wavelength (3) admitted through the aperture (18) and selected by the first spectral filter (19),
such that the geometrical axis (G) is constant and does not run through the sample (6), and the optical array (16), the second focal point (17), the aperture (18), the first spectral filter (19) and the first detector (20) - together with the mirror (4) and the deflector element (7) - are arranged on this geometrical axis (G), which in the region between the mirror (4) and the first detector (20) is at least partly identical with the optical axis (5), and such that the deflector element (7) for deflecting the bundled light (2) from the first laser (1) in a direction parallel to the geometrical axis (G) on to this mirror (4) comprises a highly reflective zone (21) intended for the bundled laser beam (2) and in its other zones is essentially transparent to the light of the first wavelength (2) and also of the second wavelength (3).

2. System according to Claim 1, **characterized in that** the table (13) is furthermore movable along the Y spatial axis, the X and Y axes being at least approximately parallel to the surface (15) of a sample carrier (14).

3. System according to one of Claims 1 or 2, **characterized in that** the highly reflective zone (21) of the deflector element (7) is arranged at a distance (A) from the optical axis (5) identical to the geometrical axis (G), so that the ray path for the bundled light of the first wavelength (2) emitted by the laser (1) runs parallel to and at a distance (A) from these axes (5, G).

4. System according to Claim 3, **characterized in that** an opaque shutter (22), designed for the masking out when required of a laser beam used for focusing and excitation and reflected from the sample (6), is positioned between the deflector element (7) and the optical array (16).

5. System according to any one of the preceding Claims, **characterized in that** it further comprises a separator element (23) designed to separate the light of the first wavelength (2) emitted by the laser (1) into an excitation beam (24) for the fluorescence and a focusing beam (25) parallel to this excitation beam (24).

6. System according to Claim 5, **characterized in that** an opaque shutter (22), designed for the masking out when required of a laser beam used for excitation of the fluorescent dyes, is positioned between the deflector element (7) and the separator element (23).

7. System according to any one of the preceding Claims, **characterized in that** the first spectral filter (19) is positioned between the aperture (18) and the first detector (20).

8. System according to any one of the preceding Claims, comprising:
k) a second laser (1') which, for the purpose of excitation of the second fluorescent dyes, emits light of a third wavelength (2') traveling parallel to the light of the first wavelength (2), so that these fluorescent dyes emit light of a fourth wavelength (3');
I) a second spectral filter (19') for selection of light of the fourth wavelength (3'); and
m) a second detector (20') for measurement of the intensity of the selected light of the fourth wavelength (3') selected by the second spectral filter (19'),
**characterized in that** it further comprises a beam splitter element (26) which is at least partially transparent to the light (12) of the second wavelength (3) emitted by the first fluorescent dyes and collimated by the objective (8), and which is constructed to reflect or to deflect the light of the fourth wavelength (3') away from the geometrical axis (G) in the direction of a second detector (20').

9. System according to Claim 1 or 8, **characterized in that** it comprises at least one focusing lens (28,28') for focusing the light of the second (3) or fourth wavelength (3') that passes through the aperture (18).

10. System according to Claim 8 or 9, **characterized in that** the beam splitter element (26) is positioned between the aperture (18) and the first detector (20).

11. System according to any one of the preceding Claims, **characterized in that** the sample carrier (14) that can be received by the table (13) takes the form of a microscope slide made in particular of plastic, glass, silicon, pyrolytic graphite or similar substance.

12. System according to any one of Claims 1 to 10, **characterized in that** the sample carrier (14) that can be received by the table (13) takes the form of a microplate, especially with 96, 384, 1536 or more wells.

13. System according to any one of Claims 1 to 10, **characterized in that** the sample carrier (14) that can be received by the table (13) takes the form of a frame (31) capable of receiving and holding several microscope slides made in particular of plastic, glass, silicon, pyrolytic graphite or similar substance, and displays the external dimensions of a microplate.

14. System according to any one of the preceding Claims, **characterized in that** the unit (10) can be fixed during excitation and measurement of the fluorescence from the samples (6) and that the table (13) is so constructed as to be simultaneously movable along the X and/or Y axes, the Y axis being oriented parallel to the axes (5, G).

15. System according to any one of the preceding Claims, **characterized in that** the table (13), for the purpose of excitation and measurement of the fluorescence from the samples (6), is so constructed as to be movable along the X axis, and that the unit (10) can simultaneously be moved to and forth along the Y axis, the Y axis being oriented parallel to the axes (5, G).

16. System according to Claim 15, **characterized in that** the oscillating linear drive (11) takes the form of a voice coil.

17. System according to Claim 14 or 15, **characterized in that** the unit (10) further comprises a counteroscillator (29) which can be moved to and forth along the Y axis in contrary unison with the oscillating linear drive (11) in order to cancel out any vibrations of the unit.

18. System according to any one of the preceding Claims, **characterized in that** the aperture (18) is made interchangeable for various different apertures.

19. System according to any one of the preceding Claims, **characterized in that** the first spectral filter (19) takes the form of a filter changer with at least two different filters that can be automatically interchanged and that this filter changer can be exchanged manually for another filter changer.

20. System according to any one of Claims 8 to 19, **characterized in that** the beam splitter element (26) takes the form of a slide changer with interchangeable mirrors.

21. System according to any one of the preceding Claims, **characterized in that** it comprises a computer or microprocessor to record and process the measurement signals obtained from the detectors (20,20') and to issue data corresponding to these signals.

22. System according to Claim 21, **characterized in that** the computer or microprocessor is also designed to control the movements of the table (13), the table (13) being so constructed as to be movable in the X and/or Y and/or Z directions and tiltable about the X and/or Y axes.

23. Procedure for the excitation and measurement of fluorescence on or in samples treated with fluorescent dyes with an optical system employing at least:
a) a first laser (1) which, for the purpose of exciting these fluorescent dyes, emits light of a first wavelength (2) so that these fluorescent dyes emit light of a second wavelength (3);
b) a mirror (4) to deflect the bundled light of the first wavelength (2) coming from the first laser (1) and falling parallel to an optical axis (5) on the mirror (4) in the direction of a sample (6);
c) a deflector element (7) to deflect the bundled light (2) from the first laser (1) on to this mirror (4);
d) an objective (8) to form a first focal point (9) on or in the sample (6) for the incident bundled light of the first wavelength (2) from the first laser (1) deflected by the mirror (4);
e) a unit (10) comprising the mirror (4) and the objective (8), such that mirror and objective are immovably fixed relative to each other and that this unit (10) is arranged so that it can be moved back and forth along a geometrical axis (G) and is functionally linked to an oscillating linear drive (11), the objective (8) being further so designed as to act as a collimator for the light of the second wavelength (3) emitted by the first fluorescent dyes on or in the sample (6) and the mirror (4) being so designed that it deflects this collimated light (12) in a direction opposite to the direction of incidence of the bundled light of the first wavelength (2) and parallel to the geometrical axis (G);
f) a table (13) which can be moved at least along the X and Z spatial axes of an essentially right-angled coordinate system, designed to receive sample carriers (14) for samples (6) treated with at least one fluorescent dye, the X axis being at least approximately parallel to the surface (15) of a sample carrier (14) which, in order to align the sample (6) opposite the first focal point (9), can be moved in the direction of the Z axis by means of the table (13);
g) an optical array (16) for the formation of a second focal point (17) with the light of the second wavelength (3) emitted by the first fluorescent dyes on or in the sample (6), collimated by the objective (8) and deflected by the mirror (4);
h) an aperture (18) positioned at the second focal point (17) to exclude the light of the second wavelength (3) which strikes this aperture (18) from further away than a specified distance from the focal point (17);
i) a first spectral filter (19) to select the light of the second wavelength (3) passing through the aperture (18); and
j) a first detector (20) for measuring the intensity of the selected light of the second wavelength (3) admitted through the aperture (18) and selected by the first spectral filter (19),
such that the geometrical axis (G) is constant and does not run through the sample (6), and the optical array (16), the second focal point (17), the aperture (18), the spectral filter (19) and the first detector (20) - together with the mirror (4) and the deflector element (7) - are arranged on this geometrical axis (G), which in the region between the mirror (4) and the first detector (20) is at least partly identical with the optical axis (5), and in which by means of the deflector element (7) which, for deflecting the bundled laser beam (2), comprises a highly reflective zone (21) and in its other zones is essentially transparent to the light of the first wavelength (2) and the second wavelength (3), bundled light (2) from the first laser (1) is deflected in a direction parallel to the geometrical axis (G) on to this mirror (4).

24. Procedure according to Claim 23, **characterized in that** the highly reflective zone (21) of the deflector element (7) is arranged at a distance (A) from the optical axis (5) identical to the geometrical axis (G), so that the path of the beam of bundled light of the light of a first wavelength (2) from the laser (1) travels parallel to and at a distance (A) from these axes (5, G).

25. Procedure according to one of Claims 23 or 24, **characterized in that**, in order to define an optimum Z position of the movable table (13) or of a sample (6), an opaque shutter (22) situated between the deflector element (7) and the optical array (16) is withdrawn from the path of the beam and that by means of a series of measurement signals obtained during a Z movement of the table (13) by the first detector (20) and recorded in a computer or microprocessor, the Z position of the table (13) corresponding to the maximum of these measurement signals is calculated and the table (13) is moved to this Z position.

26. Procedure according to Claim 23, **characterized in that** in order to define an optimum Z position of the movable table (13) or of a sample (6), an opaque shutter (22) situated between the deflector element (7) and the separator element (23) is pushed into the path of the beam and that by means of a series of measurement signals obtained during a Z movement of the table (13) by the first detector (20) and recorded in a computer or microprocessor, the Z position of the table (13) corresponding to the maximum of these measurement signals is calculated and the table (13) is moved to this Z position.

27. Procedure according to Claim 25 or 26, **characterized in that** to establish the maximum of these measurement signals, the geometrical center between the points of inflection of the rising and trailing edges of the measurement signal is taken.

28. Procedure according to any one of Claims 25 to 27, **characterized in that** this procedure is carried out on at least three points on a sample carrier and the table (13), in accordance with the maxima defined for these three points, is moved as much as necessary by translation along the X, Y and Z directions and tilting about the X and Y axes.

29. Procedure according to Claim 28, **characterized in that** it is performed by a computer or microprocessor which obtains and processes the measurement signals generated by the detectors (20,20'), issues the data according to these signals and also controls the movements of the table (13).

30. Procedure according to any one of Claims 23 to 29, **characterized in that** the table (13), before measurement of the fluorescence on or in at least one sample (6), is translated along the X and/or Y axis and immobilized for excitation and measurement of fluorescence, the unit (10) being held still at the same time.

31. Procedure according to any one of Claims 23 to 29, **characterized in that** the table (13), during excitation and measurement of fluorescence on or in at least one sample (6), is translated along the X and/or Y axis, the unit (10) being held still at the same time.

32. Procedure according to any one of Claims 23 to 29, **characterized in that**, for excitation and measurement of fluorescence on or in at least one sample (6), the table (13) is held still while the unit (10) oscillates along the Y axis at the same time.

33. Procedure according to any one of Claims 23 to 29, **characterized in that**, for excitation and measurement of fluorescence on or in at least one sample (6), the table (13) is linearly translated along the X axis while the unit (10) oscillates along the Y axis at the same time.

34. Procedure according to any one of Claims 30 to 33, **characterized in that** the corresponding detector signals are recorded and processed in the computer or microprocessor.

35. Procedure according to any one of Claims 30 to 33, **characterized in that** the opaque shutter (22) is pushed into or pulled out of the path of the beam.

36. Procedure according to any one of Claims 30 to 35, **characterized in that** the excitation and measurement of fluorescence on or in a sample (6) is performed in a Z position of the movable table (13) and the sample carrier (14) or a sample (6), optimized in accordance with Claims 27 to 31 and the corresponding detector signals are recorded and processed in the computer or microprocessor.

37. Procedure according to any one of Claims 23 to 36, **characterized in that** for each sample (6), only one flash of light or a few discrete flashes of light are emitted for excitation of fluorescence.

38. Procedure according to any one of Claims 23 to 37, **characterized in that** a plurality of lasers for generation of bundled excitation light of different wavelengths in or on a plurality of fluorescent dyes and a plurality of detectors for measurement of the corresponding signals are employed.

39. Procedure according to any one of Claims 23 to 38, **characterized in that** signals from at least two lasers, fluorescent dyes and detectors are recorded, processed and issued superimposed.

## Revendications

1. Système optique destiné à activer et mesurer la fluorescence sur ou dans des échantillons traités avec des colorants fluorescents, comportant:
a) au moins un premier laser (1) qui, pour activer des premiers colorants fluorescents sur ou dans un échantillon, émet de la lumière d'une première longueur d'onde (2), pour que ces premiers colorants fluorescents émettent une lumière d'une seconde longueur d'onde (3);
b) un miroir (4), destiné à dévier la lumière focalisée de la première longueur d'onde (2), provenant du premier laser (1) et faisant incidence parallèlement à un axe optique (5) sur le miroir (4), dans la direction d'un échantillon (6);
c) un élément de déviation (7) destiné à dévier la lumière focalisée (2) du premier laser (1) sur ce miroir (4);
d) une optique (8) destinée à former un premier foyer (9) sur ou dans l'échantillon (6) pour la lumière focalisée de la première longueur d'onde (2), faisant incidence depuis le premier laser (1) et déviée par le miroir (4);
e) une unité (10) qui comprend le miroir (4) et l'optique (8), l'optique et le miroir étant disposés dans l'unité d'une façon immobile l'un par rapport à l'autre et cette unité (10) étant disposée de façon à se déplacer par va et vient linéairement le long d'un axe géométrique (G) et étant coordonnée à un entraînement linéaire oscillant (11); l'optique (8) étant de plus conçue comme un collimateur pour la lumière d'une seconde longueur d'onde (3) émise par les premiers colorants fluorescents sur ou dans l'échantillon (6), et le miroir (4) étant de plus exécuté pour dévier cette lumière (12) collimatée à l'opposé de la direction d'incidence de la lumière focalisée de la première longueur d'onde (2) et parallèlement à l'axe géométrique (G);
f) une table (13) mobile au moins dans la direction des axes spatiaux X et Z d'un système de coordonnées essentiellement orthogonal, pour recevoir des porte-échantillons (14) pour les échantillons (6) traités avec au moins un premier colorant fluorescent et pour aligner l'échantillon (6) par rapport au premier foyer (9);
g) un dispositif optique (16) pour former un second foyer (17) avec la lumière de la seconde longueur d'onde (3), émise par les premiers colorants fluorescents sur ou dans l'échantillon (6), collimatée par l'optique (8) et déviée par le miroir (4);
h) un sténopé (18) disposé dans le second foyer (17) et destiné à diaphragmer la lumière de la seconde longueur d'onde (3) qui frappe sur ce sténopé (18) plus loin que selon un écart déterminé au foyer (17);
i) un premier filtre spectral (19) destiné à sélectionner la lumière de la seconde longueur d'onde (3) traversant le sténopé (18); et
j) un premier détecteur (20) destiné à mesurer l'intensité de la lumière de la seconde longueur d'onde (3), passée par le sténopé (18) et sélectionnée par le premier filtre spectral (19),
dans lequel l'axe géométrique (G) est continu et ne s'étend pas par l'échantillon (6), et le dispositif optique (16), le second foyer (17), le sténopé (18), le premier filtre spectral (19) et le premier détecteur (20) - avec le miroir (4) et l'élément de déviation (7) - sont disposés sur cet axe géométrique (G) qui, dans la zone entre le miroir (4) et le premier détecteur (20), est au moins partiellement identique à l'axe optique (5), et
dans lequel l'élément de déviation (7) destiné à dévier la lumière focalisée (2) provenant du premier laser (1) dans une direction parallèle à l'axe géométrique (G) sur ce miroir (4) comprend une zone (21) très spéculaire définie pour le faisceau laser focalisé (2) et est essentiellement transparent dans ses autres zones tant pour la lumière de la première (2) que de la seconde (3) longueurs d'onde.

2. Système selon la revendication 1, **caractérisé en ce que** la table (13) est de plus mobile dans la direction de l'axe spatial Y, où les axes X et Y reposent au moins approximativement parallèlement à la surface (15) d'un porte-échantillons (14).

3. Système selon l'une des revendications 1 ou 2, **caractérisé en ce que** la zone très spéculaire (21) de l'élément de déviation (7) est disposée selon un écart (A) par rapport à l'axe optique (5) identique à l'axe géométrique (G), si bien que la trajectoire du faisceau pour la lumière focalisée de la première longueur d'onde (2), provenant du laser (1), s'étend parallèlement et selon un écart (A) par rapport à cet axe (5, G).

4. Système selon la revendication 3, **caractérisé en ce qu'**un obturateur (22) opaque - destiné à diaphragmer temporairement un rayon laser utilisé pour la focalisation et l'excitation et réfléchi par l'échantillon (6) - est disposé entre l'élément de déviation (7) et le dispositif optique (16).

5. Système selon l'une des revendications précédentes, **caractérisé en ce qu'**il comprend de plus un élément séparateur (23) destiné à séparer la lumière, provenant du laser (1), de la première longueur d'onde (2) en un rayon d'excitation (24) pour la fluorescence et un rayon de focalisation (25) parallèle à ce rayon d'excitation (24).

6. Système selon la revendication 5, **caractérisé en ce qu'**un obturateur (22) opaque est disposé - pour diaphragmer temporairement un rayon laser utilisé pour l'excitation des colorants fluorescents - entre l'élément de déviation (7) et l'élément séparateur (23).

7. Système selon l'une des revendications précédentes, **caractérisé en ce que** le premier filtre spectral (19) est disposé entre le sténopé (18) et le premier détecteur (20).

8. Système selon l'une des revendications précédentes, qui comprend:
k) un second laser (1') qui - pour exciter des seconds colorants fluorescents - émet une lumière d'une troisième longueur d'onde (2'), qui s'étend parallèlement à la lumière de la première longueur d'onde (2), pour que ces colorants de fluorescence émettent une lumière d'une quatrième longueur d'onde (3');
1) un second filtre spectral (19') destiné à sélectionner la lumière de la quatrième longueur d'onde (3'); et
m) un second détecteur (20') destiné à mesurer l'intensité de la lumière de la quatrième longueur d'onde (3'), sélectionnée par le second filtre spectral (19'),
**caractérisé en ce qu'**il comprend de plus un élément séparateur de faisceau (26) qui est au moins partiellement transparent à la lumière émise (12) de la seconde longueur d'onde (3) par les premiers colorants fluorescents et collimatée par l'optique (8), et qui est conçu pour réfléchir
ou dévier la lumière de la quatrième longueur d'onde (3') depuis l'axe géométrique (G) dans la direction d'un second détecteur (20').

9. Système selon la revendication 1 ou 8, **caractérisé en ce qu'**il comprend de plus au moins une lentille convergente (28,28') destinée à converger la lumière de la seconde (3) ou de la quatrième (3') longueur d'onde et traversant le sténopé (18).

10. Système selon la revendication 8 ou 9, **caractérisé en ce que** l'élément séparateur de faisceau (26) est disposé entre le sténopé (18) et le détecteur (20).

11. Système selon l'une des revendications précédentes, **caractérisé en ce que** le porte-échantillons (14) pouvant être logé par la table d'échantillons (13) est conçu en tant que porte-objet, en particulier en plastique, en verre, en silicium, en graphite pyrolytique et équivalent.

12. Système selon l'une des revendications 1 à 10, **caractérisé en ce que** le porte-échantillons (14) pouvant être logé par la table d'échantillons (13) est exécuté en tant que plaque de microtitration, en particulier comportant 96, 384, 1536 puits ou plus.

13. Système selon l'une des revendications 1 à 10, **caractérisé en ce que** le porte-échantillons (14) pouvant être logé par la table d'échantillons (13) est exécuté en tant que cadre (31) destiné à loger et retenir plusieurs porte-objets, en particulier en plastique, en verre, en silicium, en graphite pyrolytique ou équivalent, et présente les dimensions extérieures d'une plaque de microtitration.

14. Système selon l'une des revendications précédentes, **caractérisé en ce que** l'unité (10) - pendant l'activation et la mesure de la fluorescence émise par les échantillons (6) - peut être fixée, et **en ce que** la table d'échantillons (13) est exécutée de façon mobile simultanément dans la direction de l'axe X et/ou Y, l'axe Y s'étendant parallèlement aux axes (5, G).

15. Système selon l'une des revendications précédentes, **caractérisé en ce que** la table d'échantillons (13) - pour l'excitation et la mesure de la fluorescence émise par les échantillons (6) - est exécutée de façon mobile dans la direction de l'axe X, et **en ce que** l'unité (10) est simultanément mobile par va-et-vient dans la direction de l'axe Y, l'axe Y s'étendant parallèlement aux axes (5, G).

16. Système selon la revendication 15, **caractérisé en ce que** l'entraînement linéaire oscillant (11) est exécuté en tant que bobine mobile ("voice coil").

17. Système selon la revendication 14 ou 15, **caractérisé en ce que** l'unité (10) comprend de plus un oscillateur à contre-réaction (29) qui - pour absorber les oscillations de l'unité - peut être déplacé symétriquement à l'entraînement linéaire (11) dans la direction de l'axe Y.

18. Système selon l'une des revendications précédentes, **caractérisé en ce que** le sténopé (18) est exécuté de façon à pouvoir être échangé selon différentes tailles de trou.

19. Système selon l'une des revendications précédentes, **caractérisé en ce que** le premier filtre spectral (19) est exécuté en tant que tiroir à filtres comportant au moins deux filtres différents, pouvant être interchangés automatiquement, et **en ce que** ce tiroir à filtres peut être échangé manuellement contre un autre tiroir à filtres.

20. Système selon l'une des revendications 8 à 19, **caractérisé en ce que** l'élément séparateur de faisceau (26) est exécuté en tant que tiroir à glissière avec des miroirs échangeables.

21. Système selon l'une des revendications précédentes, **caractérisé en ce qu'**il comprend un ordinateur ou un microprocesseur permettant d'enregistrer et de traiter les signaux de mesure captés par les détecteurs (20,20') et de sortir des données correspondant à ces signaux.

22. Système selon la revendication 21, **caractérisé en ce que** l'ordinateur ou le microprocesseur est de plus exécuté pour commander les déplacements de la table (13), la table (13) étant exécutée pour être déplacée dans les directions des axes X et/ou Y et/ou Z ainsi que pour être basculée autour de l'axe X et/ou Y.

23. Procédé d'activation et de mesure de la fluorescence sur ou dans des échantillons traités avec des colorants fluorescents par un système optique dans lequel on utilise au moins:
a) un premier laser (1) qui - pour activer ces colorants fluorescents - émet de la lumière d'une première longueur d'onde (2) pour que ces colorants fluorescents émettent une lumière d'une seconde longueur d'onde (3);
b) un miroir (4), destiné à dévier la lumière focalisée de la première longueur d'onde (2), provenant du premier laser (1) et faisant incidence parallèlement à un axe optique (5) sur le miroir (4), dans la direction d'un échantillon (6);
c) un élément de déviation (7) destiné à dévier la lumière focalisée (2) du premier laser (1) sur ce miroir (4);
d) une optique (8) destinée à former un premier foyer (9) sur ou dans l'échantillon (6) pour la lumière focalisée de la première longueur d'onde (2), faisant incidence depuis le premier laser (1) et déviée par le miroir (4);
e) une unité (10) qui comprend le miroir (4) et l'optique (8), l'optique et le miroir étant disposés dans l'unité d'une façon immobile l'un par rapport à l'autre et cette unité (10) étant disposée de façon à se déplacer par va et vient linéairement le long d'un axe géométrique (G) et étant coordonnée à un entraînement linéaire oscillant (11), l'optique (8) étant de plus conçue comme un collimateur pour la lumière d'une seconde longueur d'onde (3) émise par les colorants fluorescents sur ou dans l'échantillon (6), et le miroir (4) étant de plus exécuté, pour dévier cette lumière (12) collimatée, à l'opposé de la direction d'incidence de la lumière focalisée de la première longueur d'onde (2) et parallèlement à l'axe géométrique (G);
f) une table (13) mobile au moins dans la direction des axes spatiaux X et Z d'un système de coordonnées essentiellement orthogonal, pour recevoir des porte-échantillons (14) pour les échantillons (6) traités avec au moins un colorant fluorescent, où l'axe X s'étend au moins approximativement parallèlement à la surface (15) d'un porte-échantillons (14), qui - pour orienter l'échantillon (6) par rapport au premier foyer (9) - peut être déplacé au moyen de la table (13) dans la direction de l'axe Z;
g) un dispositif optique (16) pour former un second foyer (17) avec la lumière de la seconde longueur d'onde (3), émise par les colorants fluorescents sur ou dans l'échantillon, collimatée par l'optique (8) et déviée par le miroir (4);
h) un sténopé (18) disposé dans le second foyer (17) et destiné à diaphragmer la lumière de la seconde longueur d'onde (3) qui frappe sur ce sténopé (18) plus loin que selon un écart déterminé au foyer (17);
i) un premier filtre spectral (19) destiné à sélectionner la lumière de la seconde longueur d'onde (3) traversant le sténopé (18); et
j) un premier détecteur (20) destiné à mesurer l'intensité de la lumière de la seconde longueur d'onde (3), passée par le sténopé (18) et sélectionnée par le premier filtre spectral (19),
où l'axe géométrique (G) est continu et ne s'étend pas par l'échantillon, et le dispositif optique (16), le second foyer (17), le sténopé (18), le premier filtre spectral (19) et le premier détecteur (20) - avec le miroir (4) et l'élément de déviation (7) - sont disposés sur cet axe géométrique (G) qui, dans la zone entre le miroir (4) et le premier détecteur (20), est au moins partiellement identique à l'axe optique (5), et dans lequel avec l'élément de déviation (7), qui comprend une zone très spéculaire définie pour le faisceau laser (2) focalisé, et est essentiellement transparent dans ses autres zones tant à la lumière de la première (2) que de la seconde (3) longueurs d'onde, la lumière focalisée (2) provenant du premier laser (1) est déviée sur ce miroir (4) dans une direction parallèle à l'axe géométrique (G).

24. Procédé selon la revendication 23, **caractérisé en ce que** la zone très spéculaire (21) de l'élément de déviation (7) est disposée selon un écart (A) par rapport à l'axe optique (5) identique à l'axe géométrique (G), si bien que la trajectoire du faisceau pour la lumière focalisée de la première longueur d'onde (2), provenant du laser (1), s'étend parallèlement et selon l'écart (A) à ces axes (5,G).

25. Procédé selon l'une des revendications 23 ou 24, **caractérisé en ce que** - pour définir une position Z optimale de la table mobile (13) ou d'un échantillon (6) - on tire de la trajectoire du faisceau un obturateur (22) opaque, disposé entre l'élément de déviation (7) et le dispositif optique (16), et - au moyen d'une série de signaux de mesure générés pendant un déplacement Z de la table (13) par le premier détecteur (20) et enregistrés dans un ordinateur ou un microprocesseur - on calcule pour celui-ci la position Z de la table correspondant au maximum de ces signaux de mesure, puis on amène la table (13) dans cette position Z.

26. Procédé selon la revendication 23, **caractérisé en ce que** - pour définir une position Z optimale de la table mobile (13) ou d'un échantillon (6) - on déplace dans la trajectoire du faisceau un obturateur (22) opaque et disposé entre l'élément de déviation (7) et l'élément séparateur (23), et - au moyen d'une série de signaux de mesure générés pendant un déplacement Z de la table (13) par le premier détecteur (20) et enregistrés dans un ordinateur ou un microprocesseur - on calcule pour celui-ci la position Z de la table correspondant au maximum de ces signaux de mesure, puis on amène la table (13) dans cette position Z.

27. Procédé selon la revendication 25 ou 26, **caractérisé en ce que**, pour déterminer le maximum de ces signaux de mesure, on prend le centre géométrique entre les points de transition des flancs montants et descendants du signal de mesure.

28. Procédé selon l'une des revendications 25 à 27, **caractérisé en ce que** ce procédé est réalisé au moins au niveau de trois emplacements d'un porte-échantillons, et **en ce que** la table (13) - selon les maxima définis pour ces trois emplacements - est déplacée aussi loin que nécessaire dans les directions des axes X, Y et Z et basculée autour de l'axe X et Y.

29. Procédé selon la revendication 28, **caractérisé en ce qu'**il est réalisé au moyen d'un ordinateur ou d'un microprocesseur, qui capte et traite les signaux de mesure générés par les détecteurs (20,20'), qui émet des données correspondant à ces signaux et commande de plus les déplacements de la table (13).

30. Procédé selon l'une des revendications 23 à 29, **caractérisé en ce que** la table (13) - avant la mesure de la fluorescence sur ou dans au moins un échantillon (6) - est déplacée dans la direction de l'axe X et/ou Y et - pour activer et mesurer la fluorescence - arrêtée avec retenue simultanée de l'unité (10).

31. Procédé selon l'une des revendications 23 à 29, **caractérisé en ce que** la table (13) - pendant l'activation et la mesure de la fluorescence sur ou dans au moins un échantillon (6) et avec retenue simultanée de l'unité (10) - est déplacée dans la direction de l'axe X et/ou Y.

32. Procédé selon l'une des revendications 23 à 29, **caractérisé en ce que** - pour activer et mesurer la fluorescence sur ou dans au moins un échantillon (6) avec oscillation simultanée de l'unité (10) dans la direction de l'axe Y - on arrête la table (13).

33. Procédé selon l'une des revendications 23 à 29, **caractérisé en ce que** - pour activer et mesurer la fluorescence sur ou dans au moins un échantillon (6) - avec oscillation simultanée de l'unité (10) dans la direction de l'axe Y, on déplace linéairement la table (13) dans la direction de l'axe X.

34. Procédé selon l'une des revendications 30 à 33, **caractérisé en ce que** les signaux de détecteurs correspondants sont enregistrés et traités dans un ordinateur ou un microprocesseur.

35. Procédé selon l'une des revendications 30 à 33, **caractérisé en ce que** l'obturateur (22) opaque est déplacé dans la trajectoire du faisceau ou retiré de celle-ci.

36. Procédé selon l'une des revendications 30 à 35, **caractérisé en ce que** l'on exécute l'activation et la mesure de la fluorescence sur ou dans un échantillon (6) avec une position Z de la table mobile (13), du porte-échantillons (14) ou d'un échantillon (6) optimisée selon les revendications 27 à 31, et **en ce que** les signaux de détecteur correspondants sont enregistrés et traités dans l'ordinateur ou le microprocesseur.

37. Procédé selon l'une des revendications 23 à 36, **caractérisé en ce que** par échantillon (6), on émet uniquement un éclair lumineux ou quelques éclairs lumineux discrets pour activer la fluorescence.

38. Procédé selon l'une des revendications 23 à 37, **caractérisé en ce que** l'on utilise plusieurs lasers pour générer de la lumière d'activation focalisée, de longueurs d'onde différentes dans un ou plusieurs colorants fluorescents, et plusieurs détecteurs pour mesurer les signaux correspondants.

39. Procédé selon une ou plusieurs des revendications 23 à 38, **caractérisé en ce que** l'on enregistre, traite et émet en surimposition des signaux d'au moins deux lasers, colorants de fluorescence et détecteurs.
